# EUROPEAN PATENT APPLICATION

(11) **EP 4 672 118 A1**
(43) Date of publication of application: **31.12.2025**
(21) Application number: 24775244.7
(22) Date of filing: 25.03.2024
(51) Int. Cl.: G06Q 20/32, G06Q 20/20, G06Q 20/22, H04W 4/80

(54) **METHOD AND DEVICE FOR PROVIDING PAYMENT SERVICE BETWEEN MULTIPLE ELECTRONIC DEVICES USING ULTRA-WIDEBAND COMMUNICATION**

(30) Priority: 23.03.2023 KR 20230038140
(71) Applicant: Samsung Electronics Co., Ltd., Suwon-si, Gyeonggi-do 16677 (KR)
(72) Inventor: KOO, Jonghoe, Suwon-si Gyeonggi-do 16677 (KR); CHOI, Junyoung, Suwon-si Gyeonggi-do 16677 (KR)
(74) Representative: Gulde & Partner
(86) International application number: PCT/KR2024/003723
(87) International publication number: WO 2024/196198

(57) **Abstract**

Disclosed is a method for providing a service by using UWB communication. An operation method of a first electronic device according to an embodiment of the present disclosure may comprise the steps of: receiving an advertisement message including at least one of the number of merchant devices, a list of merchant device-specific information, and information about the length of the list; receiving a ranging initiation message, including a first indicator requesting connection with the first electronic device, from a second electronic device through UWB communication; and transmitting a ranging response message to the second electronic device through the UWB communication in response to the ranging initiation message, the ranging response message including a second indicator indicating whether connection with the second electronic device is approved.

## Description

### [Technical Field]

The disclosure relates to UWB communication and, more specifically, to a method and device for providing a payment service between a plurality of electronic devices using UWB communication.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

### [Detailed Description of the Invention]

### [Technical Problem]

The disclosure discloses a method for providing a payment service between a plurality of electronic devices using UWB communication.

### [Technical Solution]

According to an embodiment of the disclosure, a method of operating a first electronic device may include receiving an advertisement message including at least one of a number of merchant devices, a list of merchant device-specific information, or length information of the list, receiving a ranging initiation message including a first indicator requesting connection to the first electronic device from a second electronic device through UWB communication, and transmitting, in response to the ranging initiation message, a ranging response message including a second indicator indicating whether to approve connection to the second electronic device to the second electronic device through the UWB communication.

According to an embodiment of the disclosure, a method of operating a second electronic device may include broadcasting an advertisement message including at least one of a number of merchant devices, a list of merchant device-specific information, or length information of the list, transmitting a ranging initiation message including a first indicator requesting connection to a first electronic device to the first electronic device through UWB communication, and receiving a ranging response message including a second indicator indicating whether to approve connection to the second electronic device from the first electronic device through the UWB communication.

According to an embodiment of the disclosure, a first electronic device includes a transceiver and a controller. The controller may receive an advertisement message including at least one of a number of merchant devices, a list of merchant device-specific information, or length information of the list. The controller may receive a ranging initiation message including a first indicator requesting connection to the first electronic device from a second electronic device through UWB communication. The controller may control to transmit, in response to the ranging initiation message, a ranging response message including a second indicator indicating whether to approve connection to the second electronic device to the second electronic device through the UWB communication.

According to an embodiment of the disclosure, a second electronic device includes a transceiver and a controller. The controller may broadcast an advertisement message including at least one of a number of merchant devices, a list of merchant device-specific information, or length information of the list. The controller may transmit a ranging initiation message including a first indicator requesting connection to a first electronic device to the first electronic device through UWB communication. The controller may receive a ranging response message including a second indicator indicating whether to approve connection to the second electronic device from the first electronic device through the UWB communication.

### [Advantageous Effects]

A method according to an embodiment of the disclosure may provide an efficient payment service between a plurality of electronic devices using UWB communication.

### [Brief Description of Drawings]

FIG. 1 illustrates an example architecture of a UWB device according to an embodiment of the disclosure;
FIG. 2 illustrates an example configuration of a framework of a UWB device according to an embodiment of the disclosure;
FIG. 3 illustrates a method for performing communication by a plurality of electronic devices according to an embodiment of the disclosure;
FIG. 4 illustrates a structure of a UWB MAC frame according to an embodiment of the disclosure;
FIG. 5 illustrates a structure of a UWB PHY packet according to an embodiment of the disclosure;
FIG. 6 illustrates an example of a structure of a ranging block and round used for UWB ranging according to an embodiment of the disclosure;
FIG. 7 illustrates an exemplary architecture of a customer device, a merchant device, and payment infrastructure according to an embodiment of the disclosure;
FIG. 8 illustrates an example of a payment-available zone according to an embodiment of the disclosure;
FIG. 9 illustrates an example of a ranging block structure used for D2D payment according to an embodiment of the disclosure;
FIG. 10 illustrates another example of a ranging block structure used for D2D payment according to an embodiment of the disclosure;
FIG. 11 illustrates another example of a ranging block structure used for payment through payment infrastructure according to an embodiment of the disclosure;
FIGS. 12A and 12B illustrate an example of a tap-free payment method according to an embodiment of the disclosure;
FIG. 13 illustrates operations of devices in a service initialization phase according to an embodiment of the disclosure;
FIG. 14 illustrates operations of devices in a secure ranging preparation phase according to an embodiment of the disclosure;
FIG. 15 illustrates an example of data exchange operation during ranging according to an embodiment of the disclosure;
FIG. 16 illustrates an example of payment transaction data exchange operation through a data transmission phase or session according to an embodiment of the disclosure;
FIG. 17 illustrates an example of a state transition diagram according to an embodiment of the disclosure;
FIGS. 18A and 18B illustrate an example of secure ranging and payment transaction phases according to an embodiment of the disclosure;
FIGS. 19A, 19B, and 19C illustrate another example of secure ranging and payment transaction phases according to an embodiment of the disclosure;
FIGS. 20A and 20B illustrate examples of session configuration according to an embodiment of the disclosure;
FIGS. 21A and 21B illustrate examples of device roles within a session according to an embodiment of the disclosure;
FIG. 22 illustrates an example in which device roles within each session are flexibly configured according to an embodiment of the disclosure;
FIG. 23 is a view illustrating a control message that flexibly configures device roles within each session according to an embodiment of the disclosure;
FIG. 24 is a view illustrating a case where data is piggybacked in a contention-based ranging message according to an embodiment of the disclosure;
FIG. 25 is a flowchart illustrating operations of a customer device according to an embodiment of the disclosure;
FIG. 26 is a flowchart illustrating operations of a merchant device according to an embodiment of the disclosure;
FIG. 27 illustrates a configuration of a first electronic device according to an embodiment of the disclosure; and
FIG. 28 illustrates a configuration of a second electronic device according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflect the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controlee information and UWB session data required for a UWB session.

"Controller" may be a ranging device that defines and controls ranging control messages (RCM) (or control messages).

"Controllee" may be a ranging device using a ranging parameter in the RCM (or control message) received from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. In this disclosure, Applet may be a FiRa Applet defined by FiRa.

"Ranging device" may be a device capable of performing UWB ranging. In the disclosure, the Ranging Device may be an Enhanced Ranging Device (ERDEV) defined in IEEE 802.15.4z or a FiRa Device defined by FiRa. The Ranging Device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. In this disclosure, "UWB-enabled Application" may be abbreviated as an application or a UWB application. UWB-enabled Application may be a FiRa-enabled Application defined by FiRa.

"Framework" may be a component that provides access to Profiles, individual-UWB configuration and/or notifications. "Framework" may be, e.g., a collection of logical software components including Profile Manager, OOB Connector, Secure Service, and/or UWB service. In the disclosure, the Framework may be a FiRa Framework defined by FiRa.

"OOB Connector" may be a software component for establishing an out-of-band (OOB) connection (e.g., BLE connection) between Ranging Devices. In the disclosure, the OOB Connector may be a FiRa OOB Connector defined by FiRa.

"Profile" may be a previously defined set of UWB and OOB configuration parameters. In the disclosure, Profile may be a FiRa Profile defined by FiRa.

"Profile Manager" may be a software component that implements a profile available on the Ranging Device. In the disclosure, the Profile Manager may be a FiRa Profile Manager defined by FiRa.

"Service" may be an implementation of a use case that provides a service to an end-user.

"Smart Ranging Device" may be a ranging device that may implement an optional Framework API. In the disclosure, the Smart Ranging Device may be a FiRa Smart Device defined by FiRa.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange.

"STS" may be a ciphered sequence for increasing the integrity and accuracy of ranging measurement timestamps. The STS may be generated from the ranging session key.

"Secure channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the controller and the controllee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controllee.

"UWB session key" may be a key used to protect the UWB Session. The UWB Session Key may be used to generate the STS. In this disclosure, the UWB session key may be a UWB ranging session key (URSK), and may be abbreviated as a session key.

"UWB subsystem (UWBS)" may be a hardware component implementing the UWB PHY and MAC layers specifications. UWBS may have an interface to Framework and an interface to Secure Component to search for RDS. In this disclosure, the UWB PHY and MAC specifications may be, e.g., FiRa PHY and FiRa MAC specifications defined by FiRa referring to IEEE 802.15.4/4z.

"One-way ranging (OWR)" may be a ranging scheme using a time difference of arrival (TDoA) localization method. The TDoA method corresponds to a method for locating a mobile device based on a relative arrival time of a single message or multiple messages. For a description of OWR (TDoA), reference may be made to the description of IEEE 802.15.4z. As an example of the OWR scheme, a downlink (DL)-TDoA scheme may be included.

"DL-TDoA (DT)" may be a localization method using TDoA measurement from a plurality of DT-anchors. As an embodiment, the DT-anchors may exchange DT messages (DTMs) (ranging messages) with each other, and the DT-tag may passively receive the DTM. As an embodiment, each DT-tag receiving DTMs may calculate the TDoA using at least one of the reception timestamp of each DTM, the transmission timestamp of DTMs included in the corresponding DTMs, or the reply time included in the DTMs. As an embodiment, the DT-tag may estimate its location based on at least one of the calculated coordinates of TDoA and DT-anchors.

"Two-way ranging (TWR)" may be a ranging scheme capable of estimating a relative distance between two devices by measuring time of flight (ToF) through the exchange of ranging messages between the two devices. The TWR scheme may be one of double-sided two-way ranging (DS-TWR) and single-sided two-way ranging (SS-TWR). SS-TWR may be a procedure for performing ranging through one round-trip time measurement. DS-TWR may be a procedure for performing ranging through two round-trip time measurements. For a description of SS-TWR and DS-TWR, reference may be made to the description of IEEE 802.15.4z.

"UWB message" may be a message including a payload IE transmitted by the UWB device (e.g., ERDEV).

The "ranging message" may be a message transmitted by a UWB device (e.g., ERDEV) in a UWB ranging procedure. For example, the ranging message may be a message, such as a ranging initiation message (RIM), a ranging response message (RRM), a ranging final message (RFM), or a measurement report message (MRM), transmitted by a UWB device (e.g., ERDEV) in a specific phase of the ranging round. A ranging message may include one or more UWB messages. If necessary, a plurality of ranging messages may be merged into one message. For example, in the case of non-deferred DS-TWR ranging, RFM and MRM may be merged into one message in a ranging final phase.

"UWB channel" may be one of candidate UWB channels allocated for UWB communication. Candidate UWB channels allocated for UWB communication may be channels allocated for UWB communication defined in IEEE 802.15.4/4z. The UWB channel may be used for UWB ranging and/or transaction. For example, the UWB channel may be used for transmission/reception of a ranging frame RFRAME and/or transmission/reception of a data frame.

"Narrow band (NB) channel" may be a channel having a narrower bandwidth than the UWB channel. The NB channel may be a subchannel of one of the candidate UWB channels allocated for UWB communication. Candidate UWB channels allocated for UWB communication may be channels allocated for UWB communication defined in IEEE 802.15.4/4z. The NB channel may be used for advertising, device discovery, and/or connection setup for additional parameter negotiation/authentication. For example, the NB channel may be used for transmission and reception of an advertisement message, an additional advertising message, a connection request message, and/or a connection confirmation message.

When determined to make the subject matter of the present invention unnecessarily unclear, the detailed description of related known functions or features may be skipped in describing the disclosure.

Hereinafter, various embodiments of the disclosure are described with reference to the accompanying drawings.

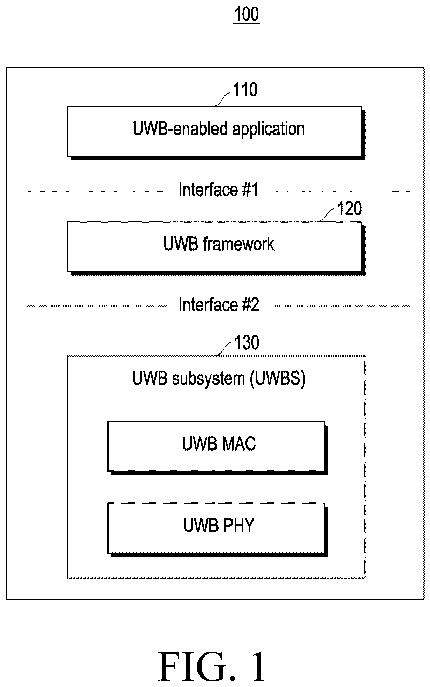

FIG. 1 illustrates an example architecture of a UWB device according to an embodiment of the disclosure;
In the disclosure, the UWB device 100 may be an electronic device supporting UWB communication. The UWB device 100 may be, e.g., a ranging device supporting UWB ranging. In an embodiment, the ranging device may be an ERDEV or a FiRa device.

In the embodiment of FIG. 1, the UWB device 100 may interact with other UWB devices through a UWB session.

The UWB device 100 may implement a first interface (Interface #1) that is an interface between the UWB-enabled Application 110 and the Framework 120, and the first interface allows the UWB-enabled application 110 on the UWB device 100 to use the UWB capabilities of the UWB device 100 in a predetermined manner. In an embodiment, the first interface may be a Framework API or a proprietary interface, but is not limited thereto.

The UWB device 100 may implement a second interface (Interface #2) that is an interface between the UWB Framework 110 and the UWB subsystem (UWBS, 130). In an embodiment, the second interface may be a UWB Command Interface (UCI) or proprietary interface, but is not limited thereto.

Referring to FIG. 1, the UWB device 100 may include a UWB-enabled Application 110, a Framework (UWB Framework) 120, and/or a UWBS 130 including a UWB MAC Layer and a UWB Physical Layer. Depending on the embodiment, some entities may not be included in the UWB device, or additional entities (e.g., security layer) may be further included.

The UWB-enabled Application 110 may trigger establishment of a UWB session by a UWBS 130 through the first interface. The UWB-enabled Application 110 may use one of previously defined profiles (profile). For example, the UWB-enabled Application 110 may use one of the profiles defined in FiRa or a custom profile. The UWB-enabled Application 110 may use the first interface to handle related events, such as service discovery, ranging notifications, and/or error conditions.

The Framework 120 may provide access to Profiles, individual-UWB configuration and/or notifications. The Framework 120 may support at least one of a function for UWB ranging and transaction execution, a function to provide an interface to the application and UWBS 130, or a function to estimate the location of the device 100. The Framework 120 may be a set of software components. As described above, the UWB-enabled Application 110 may interface with the Framework 120 through the first interface, and the Framework 120 may interface with the UWBS 130 through the second interface.

Meanwhile, in the disclosure, the UWB-enabled Application 110 and/or Framework 120 may be implemented by an application processor (AP) (or processor). Accordingly, in the disclosure, the operation of the UWB-enabled Application 110 and/or the Framework 120 may be understood as performed by an AP (or a processor). In this disclosure, the framework may be referred to as an AP or a processor.

The UWBS 130 may be a hardware component including a UWB MAC Layer and a UWB Physical Layer. The UWBS 130 may perform UWB session management and may communicate with the UWBS of another UWB device. The UWBS 130 may interface with the Framework 120 through the second interface and may obtain the secure data from the Secure Component. In an embodiment, the Framework (or application processor) 120 may transmit a command to the UWBS 130 through UCI, and the UWBS 130 may transmit a response to the command to the Framework 120. The UWBS 130 may transfer a notification to the Framework 120 through the UCI.

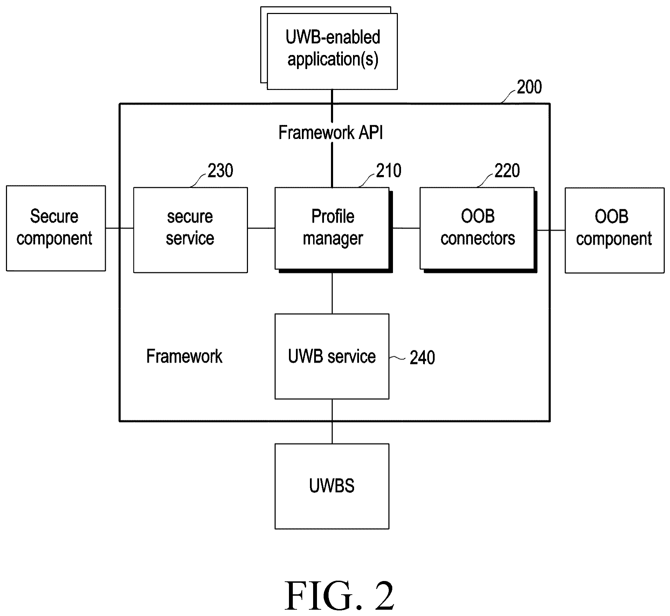

FIG. 2 illustrates an example configuration of a framework of a UWB device according to an embodiment of the disclosure;
The UWB device of FIG. 2 may be an example of the UWB device of FIG. 1.

Referring to FIG. 2, the Framework 220 may include, e.g., software components, such as Profile Manager 221, OOB Connector(s) 222, Secure Service 223 and/or UWB service 224.

The Profile Manager 221 may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF. The UWB-enabled Application 210 may communicate with the Profile Manager 221 through the first interface (e.g., Framework (API)).

The OOB Connector 222 may serve to establish an OOB connection with another device. The OOB Connector 222 may handle an OOB step including a discovery step and/or a connection step. The OOB component (e.g., BLE component) 250 may be connected to the OOB connector 222.

The Secure Service 223 may play a role of interfacing with a Secure Component 240, such as SE or TEE.

The UWB Service 224 may perform a role of managing the UWBS 230. The UWB Service 224 may provide access to the UWBS 230 from the Profile Manager 221 by implementing the second interface.

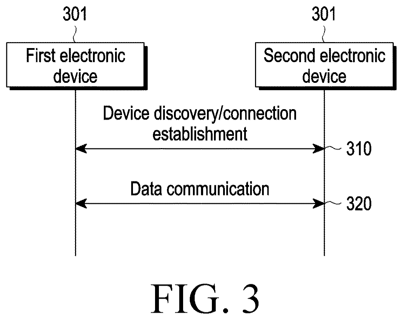

FIG. 3 illustrates a method for performing communication by a plurality of electronic devices according to an embodiment of the disclosure;
The first electronic device 301 and the second electronic device 302 of FIG. 3 may be, e.g., the UWB devices of FIG. 1 or 2.

Referring to FIG. 3, the first electronic device 301 and the second electronic device 302 may perform a device search/connection setup procedure 310 and a data communication procedure 320. The device search/connection setup procedure 310 and data communication procedure 320 may be managed or controlled by the MAC layer (entity) of the electronic device.

### (1) Device search/connection setup procedure

In the disclosure, the device search/connection setup procedure 310 may be a prior procedure performed before the data communication procedure 320. As an example, the device discovery/connection setup procedure 310 may be performed over OOB communication (channel) and/or UWB communication (channel).

The device search/connection setup procedure 310 may include at least one of the following operations.
- Device discovery operation: An operation in which the electronic device searches for (discovers) another UWB devices. The device discovery operation may include an operation for transmitting/receiving an advertisement message. In the disclosure, the device discovery operation may be referred to as a discovery operation or an advertising operation.
- Connection setup operation: An operation in which two electronic devices establish a connection. The connection setup operation may include an operation for transmitting/receiving a connection request message and a connection confirmation message. A connection (channel) established through the connection setup operation may be used to configure and control a UWB session for data communication. For example, parameters (e.g., UWB performance parameters (controllee performance parameters), UWB configuration parameters, session key-related parameters) for configuring a UWB session through a secure channel established through the connection setup operation may be negotiated between two electronic devices.

### (2) Data communication procedure

In the disclosure, the data communication procedure 320 may be a procedure for transmitting and receiving data using UWB communication. As an embodiment, the data communication procedure may be performed by UWB communication or NB communication.

The data communication procedure 320 may include at least one of the following operations.
- UWB ranging operation: An operation in which the electronic device performs UWB ranging with another electronic device in a preset UWB ranging scheme (e.g., OWR, SS-TWR, DS-TWR scheme). As an embodiment, the UWB ranging operation may include a ToF measurement operation and/or an AoA measurement operation.

For example, a DS-TWR scheme may include some or all of the following phases:
Ranging control phase (RCP): A phase in which the UWB controller transmits a UWB control message (e.g., ranging control message (RCM)) to the UWB controlee. This allows the controller to control ranging and define ranging parameters.

Ranging initiation phase (RIP): A phase in which the UWB initiator transmits a UWB initiation message (e.g., ranging initiation message (RIM)) to the UWB responder. The ranging initiation message may be a first message transmitted to initiate ranging exchange. As an embodiment, the UWB controller/initiator may transmit a ranging control message and a ranging initiation message through one message. For example, the UWB controller/initiator may transmit a ranging initiation message that includes a ranging control message.

Ranging response phase (RRP): A phase in which the UWB responder transmits a UWB response message (e.g., a ranging response message (RRM)) to the UWB initiator corresponding to the UWB initiation message.

Ranging final phase (RFP): A phase in which the UWB initiator transmits a UWB final message (e.g., a ranging final message (RFM)) to the UWB responder. The RFP may be used only in the case of double-sided two-way ranging (DS-TWR).

As an embodiment, the UWB TWR procedure may further include a measurement report phase (MRP). The measurement report phase may be a phase in which electronic devices participating in UWB ranging exchange ranging information (e.g., ToF information/AoA information) and/or related service information. As an embodiment, the UWB message used in the measurement report phase may be a measurement report message (MRM), a ranging result report message (RRRM), or a control update message (CUM). As an embodiment, the MRM may be included and transmitted in the RRM or RFM.
- Transaction operation: An operation in which an electronic device exchanges service data with another electronic device.

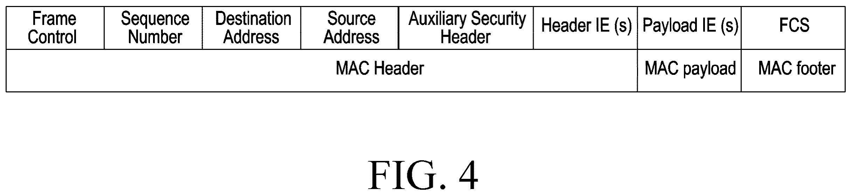

FIG. 4 illustrates a structure of a UWB MAC frame according to an embodiment of the disclosure;
In the embodiment of FIG. 4, the UWB MAC frame may follow the MAC frame structure of IEEE 802.15.4z, for example. In this disclosure, the UWB MAC frame may be simply referred to as a MAC frame or frame. As an embodiment, the UWB MAC frame may be used to transfer UWB data (e.g., UWB message, ranging message, control information, service data, application data, transaction data, etc.).

Referring to FIG. 4, the UWB MAC frame may include a MAC header (MHR), a MAC payload and/or a MAC footer (MFR).

### (1) MAC header

The MAC header may include a Frame Control field, a Sequence Number field, a Destination Address field, a Source Address field, an Auxiliary Security Header field, and/or at least one Header IE field. According to an embodiment, some fields may not be included in the MAC header.

As an embodiment, the Frame Control field may include a Frame type field, a Security Enabled field, a Frame Pending field, an AR field, a PAN ID Compression field, a Sequence Number Suppression field, an IE Present field, a Destination Addressing Mode field, a Frame Version field, and/or a Source Addressing Mode field. Each field is described below.

The Frame Type field may indicate the frame type. As an embodiment, the frame type may include a data type and/or a multipurpose type.

The Security Enabled field may indicate whether an Auxiliary Security Header field exists. The Auxiliary Security Header field may include information required for security processing.

The Frame Pending field may indicate whether the device transmitting the frame has more data for the recipient. In other words, the Frame Pending field may indicate whether there is a pending frame for the recipient.

The AR field may indicate whether acknowledgment for frame reception is required from the recipient.

The PAN ID Compression field may indicate whether the PAN ID field exists.

The Sequence Number Suppression field may indicate whether the Sequence Number field exists. The Sequence Number field may indicate the sequence identifier for the frame.

The IE Present field may indicate whether the Header IE field and the Payload IE field are included in the frame.

The Destination Addressing Mode field may indicate whether the Destination Address field may include a short address (e.g., 16 bits) or an extended address (e.g., 64 bits). The Destination Address field may indicate the address of the recipient of the frame.

The Frame Version field may indicate the frame version. For example, the Frame Version field may be set to a value indicating IEEE std 802.15.4z-2020.

The Source Addressing Mode field may indicate whether the Source Address field exists, and if the Source Address field exists, whether the Source Address field includes a short address (e.g., 16 bits) or an extended address (e.g., 64 bits). The Source Address field may indicate the address of the originator of the frame.

### (2) MAC payload

The MAC payload may include at least one Payload IE field. As an embodiment, the Payload IE field may include a Vendor Specific Nested IE. As an embodiment, the Payload IE field may include the Payload IE field of the UWB message, ranging message or control message.

### (3) MAC footer

The MAC footer may include an FCS field. The FCS field may include a 16-bit CRC or a 32-bit CRC.

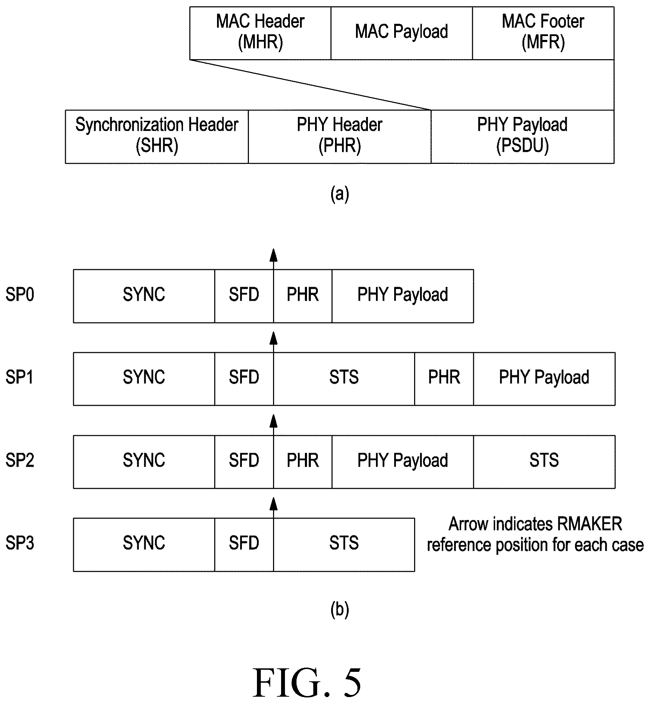

FIG. 5 illustrates a structure of a UWB PHY packet according to an embodiment of the disclosure;
FIG. 5(a) illustrates an example structure of a UWB PHY packet to which the STS packet configuration is not applied, and FIG. 5(b) illustrates an example structure of a UWB PHY packet to which the STS packet configuration is applied. In the disclosure, the UWB PHY packet may be referred to as a PHY packet, a PHY PDU (PPDU), or a frame.

Referring to FIG. 5(a), the PPDU may include a synchronization header (SHR), a PHY header (PHR), and a PHY payload (PSDU). The PSDU may include a MAC frame. As shown in FIG. 4, the MAC frame may include a MAC header (MHR), a MAC payload and/or a MAC footer (MFR). In the disclosure, the synchronization header part may be referred to as a preamble, and the part including the PHY header and the PHY payload may be referred to as a data part.

The synchronization header may be used for synchronization for signal reception and may include a SYNC field and a start-of-frame delimiter (SFD).

The SYNC field may be a field including a plurality of preamble symbols used for synchronization between transmission/reception devices. The preamble symbol may be set through one of previously defined preamble codes.

The SFD field may be a field indicating the end of the SHR and the start of the data field.

The PHY header may provide information about the configuration of the PHY payload. For example, the PHY header may include information about the length of the PSDU, information indicating whether the current frame is an RFRAME, and the like.

Meanwhile, the PHY layer of the UWB device may include an optional mode to provide a reduced on-air time for high density/low power operation. In this case, the UWB PHY packet may include an encrypted sequence (i.e., STS) to increase the integrity and accuracy of the ranging measurement timestamp. An STS may be included in the STS field of the UWB PHY packet and be used for secure ranging.

Referring to FIG. 5(b), in the case of STS packet (SP) setting 0 (SP0), the STS field is not included in the PPDU (SP0 packet). In the case of SP setting 1 (SP1), the STS field is positioned immediately after the Start of Frame Delimiter (SFD) field and before the PHR field (SP1 packet). In the case of SP setting 2 (SP2), the STS field is positioned after the PHY payload (SP2 packet). In the case of SP setting 3 (SP3), the STS field is positioned immediately after the SFD field, and the PPDU does not include the PHR and data field (PHY payload) (SP3 packet). In other words, in the case of SP3, the PPDU does not include the PHR and PHY payload.

In the embodiment of FIG. 5(b), each UWB PHY packet may include RMARKER for defining a reference time. RMARKER may be used to obtain the transmission time, reception time and/or time range of the ranging message (frame) in the UWB ranging procedure.

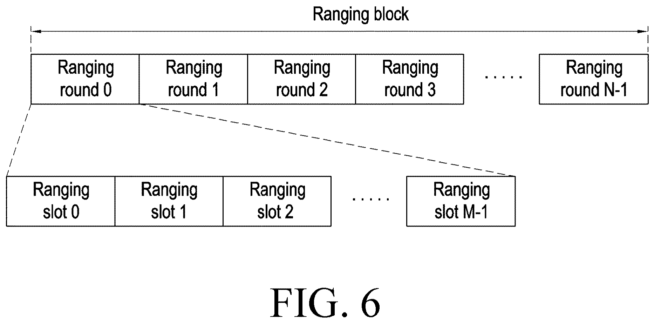

FIG. 6 illustrates an example of a structure of a ranging block and round used for UWB ranging according to an embodiment of the disclosure;
In this disclosure, the ranging block refers to a time period for ranging. The ranging round may be a period of sufficient duration to complete one entire range-measurement cycle (ranging cycle) in which a set of UWB devices participating in a ranging exchange involves. The ranging slot may be a sufficient period for transmission of at least one ranging frame (RFRAME) (e.g., ranging initiation/reply/final message, etc.).

As shown in FIG. 6, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds.

In the disclosure, a ranging block, a ranging round, and a ranging slot may be abbreviated as a block, a round, and a slot.

Meanwhile, in the disclosure, a customer device is a UWB-enabled device of a customer visiting a store, which may implement functions necessary for operating a tap-free payment service.

A payment application may be a FiRa-enabled application installed on the customer device for retail tap-free payment service.

A payment applet may be an applet executed in a secure element for retail tap-free payment service.

Payment infrastructure may be infrastructure deployed in stores capable of OOB and UWB functions. The payment infrastructure may be linked with a backend payment server capable of performing payment transactions with customer devices.

A merchant device may be a UWB-enabled device with point of sale (PoS) functionality supporting UWB capabilities.

Retail tap-free payment may be a service that allows customer devices to make payments at retail stores using UWB ranging and payment data transmitted via UWB.

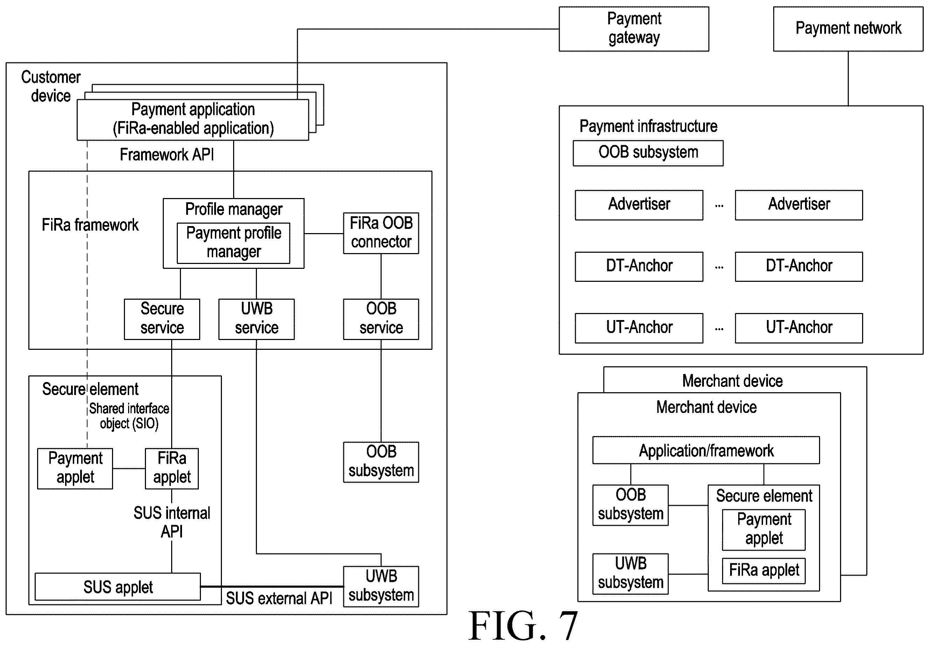

FIG. 7 illustrates an exemplary architecture of a customer device, a merchant device, and payment infrastructure according to an embodiment of the disclosure.

A retail tap-free payment profile may provide a technical solution including a set of essential UWB functions and OOB mechanisms supporting retail tap-free payment service.

Referring to FIG. 7, an architecture supporting retail tap-free payment may include a customer device, a payment gateway, payment infrastructure, a payment network, and at least one merchant device.

The customer device is a FiRa device held by a customer visiting a store, which may support various UWB measurement methods necessary for operating retail tap-free payment service. At least one payment application may be installed on the customer device as a FiRa-enabled application.

The customer device may implement a payment profile manager as one of the functional blocks of the FiRa framework. The payment profile manager may drive and/or manage multiple UWB sessions simultaneously or sequentially using various ranging methods including at least one of TWR, DL-TDoA, UL-TDoA for AoA measurement, OWR, hybrid ranging, ranging sessions, or data transmission.

The customer device may support a Bluetooth LE GAP Observer role or a UWB Observer role defined in the UWB Advertisement profile utilizing the UWB One Way Ranging for AoA Measurement ranging technique supported in FiRa MAC v2.0.

When a payment service requires a third party applet included in the secure element (SE) of the customer device, the customer device may have a payment applet in the SE. In this case, the payment applet may perform at least one operation related to payment transactions supported by the payment service provider. The payment applet may establish a secure channel between the payment applet and the merchant device by managing credentials for authentication and encryption keys. According to an embodiment, the payment applet may support APDU defined in ISO/IEC 7816-4:2020 [15] and/or JavaCard technology.

A merchant device may be a FiRa device held by an in-store merchant supporting PoS functionality and various UWB ranging methods necessary for operating retail tap-free payment service.

The payment infrastructure may provide a set of FiRa devices including an Advertiser defined in [Adv. Profile], a UT-Anchor defined in [UL-TDoA Profile], and a DT-Anchor defined in [untracked navigation Profile].

The customer device may receive an advertisement message transmitted by FiRa devices of the payment infrastructure. The advertisement message may include a ranging method and/or a UWB configuration parameter set to be used by the customer device to proceed with a payment transaction. The customer device may obtain a UWB payment identifier and/or a retail identifier to determine the ranging method to use and/or the payment application to use.

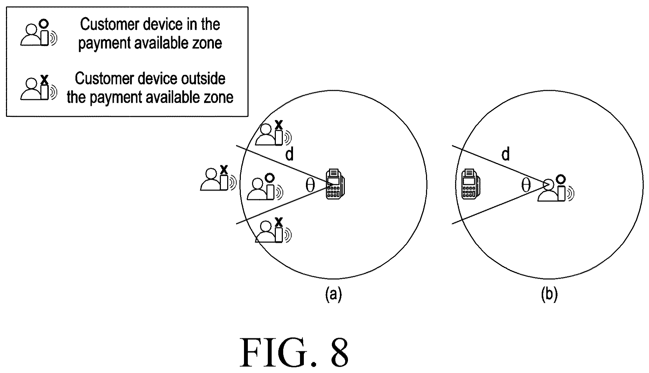

FIG. 8 illustrates an example of a payment-available zone according to an embodiment of the disclosure.

Referring to FIG. 8(a), a merchant device may establish a payment-available zone where customer devices may perform payment transactions with that merchant device. Among a plurality of customer devices, a customer device positioned in the payment-available zone may perform a payment procedure with the merchant device.

Referring to FIG. 8(b), a customer device may independently establish a payment-available zone to limit the physical space where payment transactions are valid. The customer device may perform a payment procedure with a merchant device positioned in the payment-available zone.

According to an embodiment, a payment-available zone may be defined as follows:
- Range of AoA azimuth and/or AoA elevation values measured at the merchant device and/or customer device
- Distance between the customer device and merchant device as a result of TWR

According to an embodiment, the payment-available zone may be configured by a payment service provider. In this case, a payment-available zone may be configured for each merchant device in a store, and information about the payment-available zone may be transferred to the customer device via a BLE advertisement packet, a UWB advertisement message, or other methods. According to an embodiment, a payment transaction may be performed only when both the customer device and merchant device are within the payment-available zone.

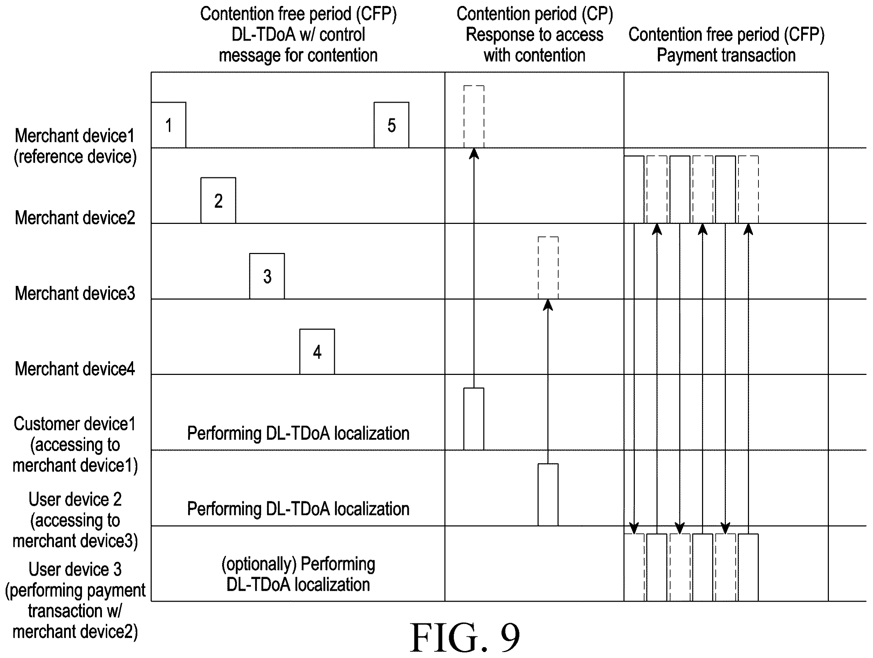

FIG. 9 illustrates an example of a ranging block structure used for D2D payment according to an embodiment of the disclosure.

Merchant devices and customer devices (or FiRa devices or UWB devices) of the payment infrastructure may coordinate UWB sessions to avoid mutual collision and interference. For this purpose, one of the merchant devices or customer devices of the payment infrastructure may act as a time reference provider (also called a Time Reference Device) using the reference time base concept in Section X.Y of UCI General Specification v2.0 [UCI v2.0] to align multiple UWB sessions in a store.

The Time Reference Device sets application configuration parameters, e.g., may set SESSION_TIME_BASE [UCI v2.0] to 0b0 (reference time base enabled) as the value of Octet 0. Merchant devices and UWB devices of the payment infrastructure may set SESSION_TIME_BASE to 0b1 (e.g., disabled). Merchant devices and UWB devices of the payment infrastructure may set Octets 1-5 of SESSION_TIME_BASE with the value of Octet 1 as the Session Handle of the reference session generated by the Time Reference Device. When a store deploys a DL-TDoA network to provide untracked navigation service [untracked navigation profile] to customer devices, the reference time base may be generated by a Reference Initiator DT-Anchor [MAC v2.0].

FIG. 9 illustrates a ranging block structure used by merchant devices and customer devices for UWB Retail Tap-Free payment service, where the ranging block may be divided into three periods: CFP (contention free period) for broadcasting by merchant devices, CP (contention period) for responses by customer devices, and CFP (contention free period) for payment transactions.

### 1) CFP (contention free period) for broadcasting by merchant devices

This CFP may be used for merchant devices and/or UWB anchors of the payment infrastructure to provide untracked navigation service to user devices or customer devices in the store or to transmit RIM (Ranging Initiation Message) along with CM (Control Message) for contention-based ranging.

### 2) CP (contention period) for responses by customer devices

This CP may be used for customer devices to respond to RIM transmitted with CM for contention-based ranging. According to an embodiment, in this CP, the customer device may randomly select a ranging slot used to respond to one of the RIMs transmitted by merchant devices attempting to establish a UWB session for payment transactions.

### 3) CFP (contention free period) for payment transactions

This CFP may be used for payment transactions. The merchant device may adjust the start time of the CFP for the payment transaction session based on the reference time base and an appropriate time offset value configured by the store manager.

Referring to FIG. 9, a first merchant device may act as a Reference Device. Each of the first merchant device, second merchant device, third merchant device, and fourth merchant device may transmit RIM along with CM in the CFP (1-5). A first customer device may transmit a response message to the RIM transmitted by the first merchant device in the CP, and a second customer device may transmit a response message to the RIM transmitted by the third merchant device in the CP. Message exchange for a payment transaction between the second merchant device and a third customer device may be performed in the CFP.

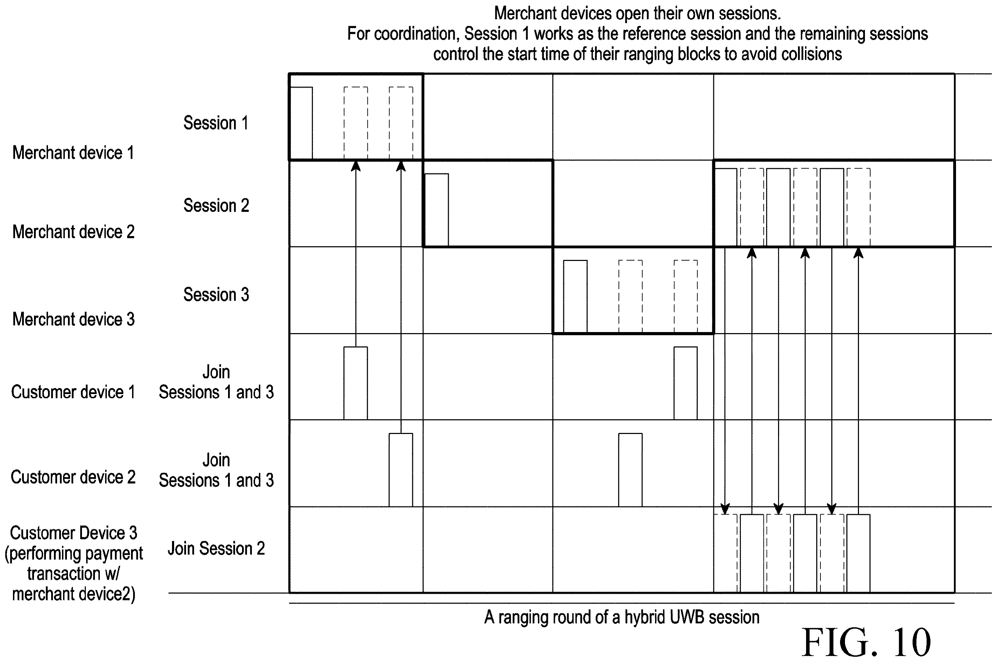

FIG. 10 illustrates another example of a ranging block structure used for D2D payment according to an embodiment of the disclosure.

Referring to FIG. 10, each of the merchant devices may open its own hybrid UWB session. For example, a first merchant device may open a first hybrid UWB session, a second merchant device may open a second hybrid UWB session, and a third merchant device may open a third hybrid UWB session. For inter-session coordination, session 1 is set as a reference session, and the second merchant device and third merchant device may control the start time for the ranging block by applying appropriate time offsets so that the second hybrid UWB session and third hybrid session do not temporally overlap the first hybrid session.

Each of the customer devices may participate in at least one session to exchange messages with the corresponding merchant device. For example, a first customer device may participate in the first session and third session to communicate with the first merchant device and third merchant device. A second customer device may participate in the first session and third session to communicate with the first merchant device and third merchant device. A third customer device may participate in the second session to perform a payment transaction procedure with the second merchant device.

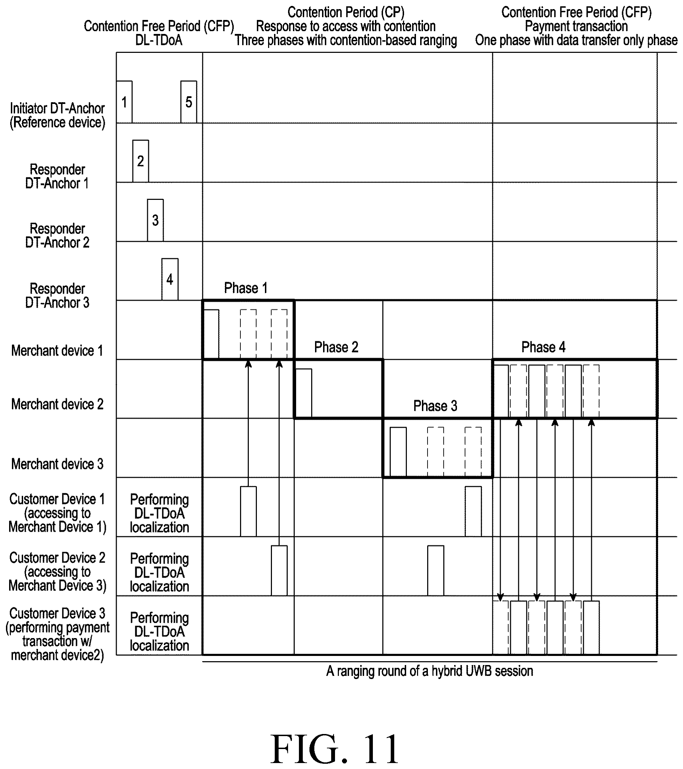

FIG. 11 illustrates another example of a ranging block structure used for payment through payment infrastructure according to an embodiment of the disclosure.

Referring to FIG. 11, a first merchant device may generate a first hybrid UWB session, and a second merchant device and third merchant device may discover customer devices by generating a hybrid UWB session phase (secondary session, Hybrid UWB session phase) within the first hybrid UWB session. FIG. 11 illustrates an example in which the second merchant device operates as a controller in a second hybrid UWB session phase driven within the first hybrid UWB session generated by the first merchant device, and the third merchant device operates as a controller in a third hybrid UWB session phase.

Referring to FIG. 11, in the CFP, an Initiator DT-Anchor operates as a reference device and may control the message transmission timing of Responder DT-Anchors 1-3. In the CFP, each of the Initiator DT-Anchor and Responder DT-Anchors 1-3 may transmit CM and/or RIM.

(phase 1) In the CP, the first merchant device may transmit a message and receive response messages from the first customer device and second customer device. For example, the first merchant device may be connected with the first customer device that transmitted the response message first.

(phase 2) In the CP, the second merchant device may transmit a message and may not receive a response message to the message.

(phase 3) In the CP, the third merchant device may transmit a message and receive response messages from the first customer device and second customer device. For example, the third merchant device may be connected with the second customer device that transmitted the response message first.

(phase 4) In the CFP, the second merchant device and third customer device may exchange multiple messages for a payment transaction.

Meanwhile, in D2D (Device-to-Device) payment, there may be no FiRa devices participating in the payment operation procedure except for merchant devices. D2D payment may be used, e.g., in restaurants or convenience stores using kiosks, UWB-enabled PoS terminals that may replace NFC-based PoS terminals or direct magnetic card readers.

In payment through payment infrastructure, there are no FiRa devices acting as merchant devices, and only payment infrastructure with service/device discovery and secure ranging/data transmission functions with customer devices may be implemented. Payment through payment infrastructure may be used, e.g., at subway gates.

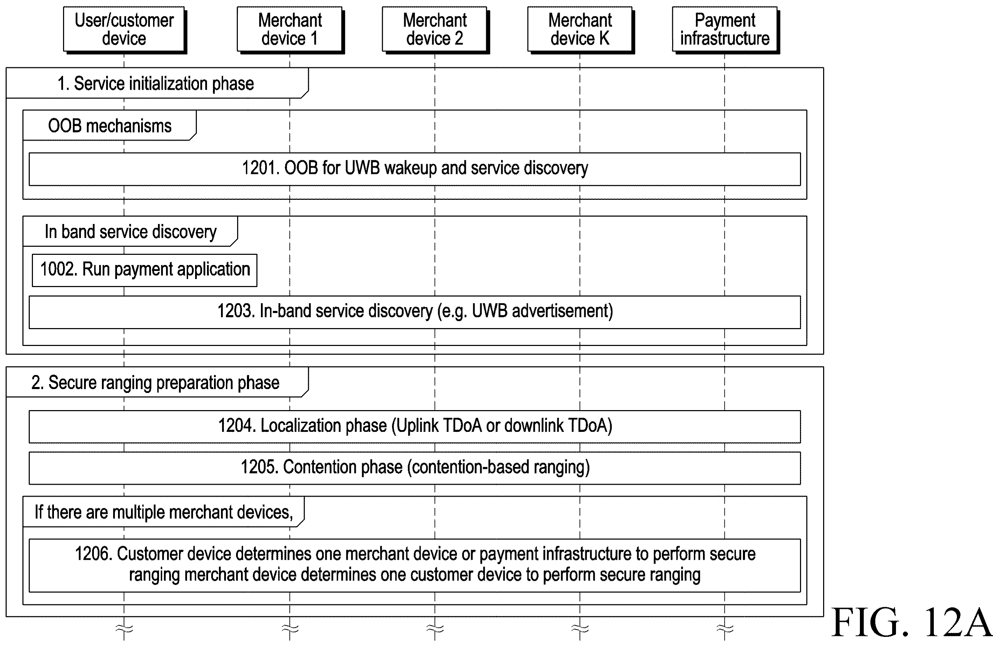

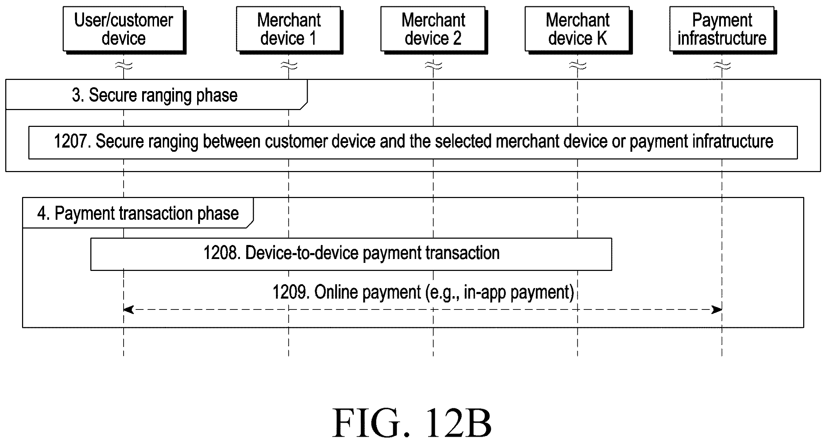

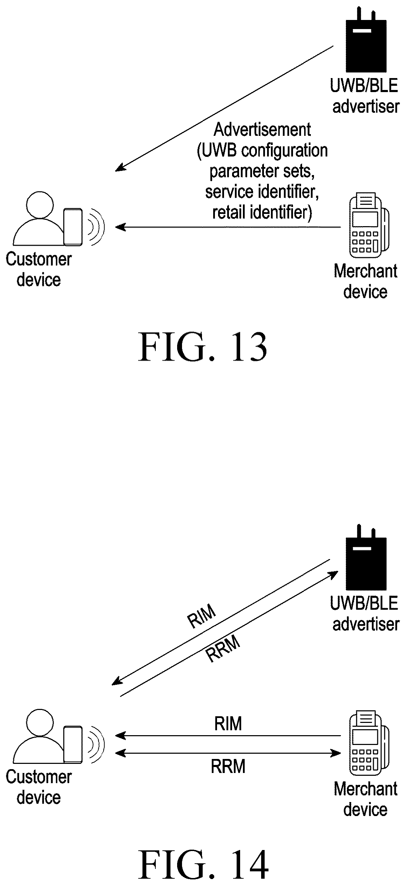

BLE Advertisement messages used for FiRa Retail Payment Service may follow the format defined in Table 1. The BLE Advertisement message in Table 1 may be the message transmitted by the customer terminal from the BLE Advertiser of the Payment Infrastructure in step 1201 of FIG. 12. It may also be the message transmitted by the UWB/BLE advertiser in FIG. 13. The customer device (or customer terminal) in FIGS. 12 to 13 may identify the type of UWB payment service or obtain information about the UWB configuration parameter set that drives multiple ranging methods necessary for operating the UWB payment service based on data included in the Service Specific Information in the BLE Advertisement message of Table 11.

**[Table 1]**

| Field name | Size (bits) | Coding explanation |
|---|---|---|
| Length | 8 | Number of octets inside AD Type element (all subsequent data within this table). Value is variable (3-256). |
| Data Type | 8 | Value set to FFh as per Bluetooth SIG specification assigned numbers. |
| Company Identifier | 16 | FiRa Consortium identifier assigned by Bluetooth SIG (little endian encoding - e.g. value 7500h means decimal value 117). |
| UWB indication data | 24 | String is encoded as follows (from the most significant bit): |
| | | 4 bits - Type of FiRa specific field = 1h (0001b). |
| | | 4 bits - Length of FiRa specific field = variable (2-15 aka 0010b-1111b). Counting all the octets of subsequent data within UWB indication data field. |
| | | 8 bits - Capabilities field encoded as follows: |
| | | Bit 7 (most significant, mask 80h) - UWB technology support as per FiRa specifications (1b if device supports UWB, 0b otherwise). |
| | | Bit 6 (mask 40h) - ISO14443 technology support (1b if device supports any of ISO14443 RFID technologies in reader mode, 0b otherwise). |
| | | Bit 5 (mask 20h) - Presence of UWB regulatory information in advertisement or extended advertisement or scan request and scan response packets (1b if present, 0b otherwise). |
| | | Bit 4 (mask 10h) - UWB regulatory information availability as a OOB UWB message (1b if available, 0b otherwise). |
| | | Bits 3 (mask 08h) - Presence of FiRa Profile Information in advertisement or extended advertisement or scan request and scan response packets (1b if present, 0b otherwise). |
| | | Bits 2 (mask 04h) - FiRa Profile Information availability as a OOB UWB message (1b if available, 0b otherwise). |
| | | Bits 1 (mask 02h) - UWB configuration data in advertisement (1b if present, 0b otherwise) |
| | | Bit 0 (mask 01h) - Indicates if Advertiser/Peripheral also operates as Bluetooth GAP Scanner/Central (in dual mode). |
| | | Value 1b indicates support of dual role, value 0b indicates support of Advertising/Peripheral role only. |
| | | 8 bits - Bluetooth RSSI threshold indication for Bluetooth GAP Central signaling if/when it should initiate Bluetooth connection. Value is interpreted as signed integer in dBm units (examples: 00h = 0dBm, FFh = -1dBm, F8h = -8dBm, 0Ah = 10dBm, 80h = -128dBm, 7Fh = 127dBm). Value 80h (aka -128) has specific meaning of "connect immediately regardless RSSI value measured". |
| | | Subsequent data - reserved (void). |
| UWB Configuration | variable | String is encoded as follows (from the most significant bit): |
| | | 4 bits - Type of FiRa specific field = 5h (0010b). |
| | | 4 bits - Length of FiRa specific field = variable (2-15 aka 0010b-1111b). Counting all the octets of subsequent data within Vendor specific data field. |
| | | 32 bits - UWB session ID |
| | | 8 bits - service ID |
| | | 8 bits - UWB configuration ID |
| | | 4 bits - channel number |
| | | 8 bits - preamble CI |
| | | 16 bits - Controller short MAC address |
| | | 4 bits - Device Role |
| | | 48 bits - STS IV for static STS |
| Service Specific Information | variable | String is encoded as follows (from the most significant bit): |
| | | 4 bits - Type of FiRa specific field = 5h (0011b). |
| | | 4 bits - Length of FiRa specific field = variable (2-15 aka 0010b-1111b). Counting all the octets of subsequent data within Vendor specific data field. |
| | | 8 bits - profile ID |
| | | Variable - service specific information |

According to an embodiment, the Service Specific Information field of [Table 1] is a component of the BLE advertisement message and may include service-specific information. According to an embodiment, the detailed content of the Service Specific Information in the Service Specific Information field may be determined according to [Table 3] below.

The Length field may indicate the number of octets for all subsequent data in the BLE advertisement message.

The Data Type field may indicate a value according to the number allocated in the Bluetooth SIG specification.

The Company Identifier field may indicate the FiRa consortium identifier allocated by Bluetooth SIG.

The UWB indication data field may indicate encoded UWB-related bitmap information.

The UWB Configuration field may indicate information about the UWB configuration necessary to start the UWB service. The user device may start activating UWBS using the corresponding parameters included in this field.

The Service Specific Information field may indicate information related to a specific UWB payment service. According to an embodiment, the value of Service Specific Information may be determined according to the format according to [Table 3].

When providing payment service information and retail information using UWB advertisement, the Advertiser may transmit an AoA measurement message along with a Data Message Payload IE including the content defined in Table 2.

Table 2 may include the content of the Data Message Payload IE transferred along with the Advertisement Message transferred by the Advertiser.

**[Table 2]**

| Parameter | Size (bits) | Notes |
|---|---|---|
| AdvertiserID | 16 | Unique ID in an application |
| TypeClass | 8 | A class of data format contained in Advertisement |
| | | Data |
| | | 0x00: RFU |
| | | 0x01: URI as defined in RFC 3986 |
| | | 0x02: Media Types as defined in RFC 2046 |
| | | 0x03: UWB configuration parameter |
| | | 0x04: Application-defined data (or OS-defined data) |
| | | 0x05: Advertisement for FiRa service |
| | | 0x06-0xFE: RFU |
| | | 0xFF: Vendor-defined type |
| | | NOTE: The value of 0x05 is used to support this Profile specification |
| Data Type Length | 8 | Length of Advertisement Data Type field (in octets) |
| | | The value shall be 8. |
| Advertisement Data Type | 8 | 0x01: Retail Tap-Free Payment service |
| | | 0x02-0xFF: RFU |
| | | NOTE: The value of 0x01 is used to support this Profile specification |
| Advertisement Data Length | 16 | Length of Advertisement Data field (in octets) |
| Advertisement Data | Variable | Defined in Table 3 |

The Advertisement Data parameter of Table 2 is information included in the Data Message IE of the UWB advertisement Message, and the Advertisement Data parameter may be determined according to Table 3. According to an embodiment, Table 2 may correspond to the Service Specific Information of the BLE advertisement message format of Table 1.

Table 3 may include the content of the Advertisement Data of Table 2.

Table 3 may list UWB/BLE advertisement information to include information about multiple PoS. Table 3 may correspond to the service specific information portion of the Service Specific Information field value of the BLE advertisement format of Table 1.

**[Table 3]**

| Field name | Size (bits) | Coding explanation |
|---|---|---|
| Length | 16 | The number of octets for all subsequent data within this table. |
| Number of UWB configurations | 8 | The number of UWB configurations (N) contained in the following field, List of UWB Configuration |
| List of UWB Configuration | N*136 | The list of UWB configuration parameter sets. This contains UWB configuration parameter sets as many as the value indicated by Number of ranging method field. |
| | | Each element of this list shall be encoded as follows: (from the most significant bit): |
| | | 4 bits - Type of FiRa specific field = 5h (0010b). |
| | | 4 bits - Length of FiRa specific field = variable (2-15 aka 0010b-1111b). Counting all the octets of subsequent data |
| | | within Vendor specific data field. |
| | | 32 bits - UWB session ID |
| | | 8 bits - service ID |
| | | 8 bits - UWB configuration ID |
| | | 4 bits - channel number |
| | | 8 bits - preamble CI |
| | | 16 bits - Controller short MAC address |
| | | 4 bits - Device Role |
| | | 48 bits - STS IV for static STS |
| Payment Service Identifier | 8 | The Payment Service Identifier can be used to identify the payment service among the various UWB payment which the retail can support. By using this service identifier, the user device is ready to start the appropriate UWB payment service. The UWB payment identifier shall be the bitmap encoded as follows: |
| | | Bit8: DL-TDoA supported |
| | | Bit7: Contention-based ranging supported |
| | | Bit6: In-band UWB payment transaction supported |
| | | Bit5: Secure ranging supported |
| | | Bit 4: Secure data transfer supported |
| | | Bit3: RFU |
| | | Bit2, Bit1: 00 (payment type 1) |
| | | 01 (payment type 2) |
| | | 10 (payment type 3) |
| | | 11 (payment type 4) |
| Number of Merchant Devices | 8 | The number of Merchant Devices which share the UWB configuration parameter sets. |
| Length of List of Merchant Device-specific information | TDB | The length of List of Merchant Device-specific information field. |
| List of Merchant Device-specific information | Variable | This field contains the list of the Merchant Device-specific information. Each element of the MAC address of the Merchant Device and the list of UWB session IDs to be used by that Merchant Device. |
| Retail identifier | Variable | The retail identifier can be used to identify the name or type of the retail. The retail identifier shall be TLV structure which consists of the following information |
| | | The name of retail in String (Tag: 0x00) |
| | | The type of retail in String (Tag: 0x01) |

The Number of UWB configurations field may indicate the number of UWB configurations in the List of UWB configurations field.

The List of UWB configurations field may be a field including UWB configuration parameter sets set as many as the value of the Number of UWB configurations field. The customer device may operate UWB sessions in order using the UWB configuration parameter sets. In other words, if the value of the number of UWB configurations is 4 and the list of UWB configurations includes 4 UWB configuration parameter sets, the customer device may operate 4 UWB sessions in order.

According to an embodiment, conditions for stopping execution of the current UWB session and starting execution of the next UWB session may be defined. The conditions may be ranges of distance and angle measured by UWB ranging between the customer terminal (or customer device) and the clerk terminal (or merchant device).

The Number of Merchant Devices field may indicate the number of merchant devices sharing a common UWB configuration to reduce the data size transmitted by BLE/UWB advertisement. Further, the number of merchant devices may mean the number of merchant device-specific information elements in the List of Merchant Device-Specific Information. The merchant device may include UWB configuration parameters that need to be set differently for each merchant device in addition to the common UWB configuration. For example, merchant devices may use the same UWB configuration parameters except for the UWB session ID and the controller's short MAC address to distinguish sessions generated by different merchant devices.

The List of Merchant Device-specific information field may include a list of merchant device-specific information. This field may be composed of UWB configuration parameters that need to be set differently for each merchant device. This field may include each element of merchant device MAC addresses and a list of UWB session IDs to be used by that merchant device. The format of the merchant device-specific information list may be predefined.

When each of three merchant devices opens a hybrid UWB session and a contention-based ranging session, an example of data included in the BLE advertisement may be as follows:
- Number of UWB configurations: 2 (e.g., hybrid UWB session and contention-based ranging session)
- List of UWB configurations: List of UWB configuration parameter sets shared by merchant devices
- Number of Merchant Devices: 3 (e.g., MD1 (first merchant device), MD2 (second merchant device), MD3 (third merchant device))
- List of Merchant Device-specific information:
- MAC address of MD1 (first merchant device)
- UWB session IDs of two UWB rangings used by MD1 (first merchant device)
- MAC address of MD2 (second merchant device)
- UWB session IDs of two UWB rangings used by MD2 (second merchant device)
- MAC address of MD3 (third merchant device)
- UWB session IDs of two UWB rangings used by MD3 (third merchant device)

To sequentially use multiple UWB ranging techniques, the common UWB configuration that multiple merchant devices must commonly use may be included in the List of UWB Configuration field.

UWB Configuration parameters distinguished by merchant device may be included in the List of Merchant Device-specific information field. The List of Merchant Device-specific Information is supposed to include MAC address and UWB Session ID, but if possible, other parameters besides these two parameters may also be included. According to an embodiment, the List of Merchant Device-specific Information may further include information distinguished by merchant device.

According to an embodiment, an indicator of whether the UWB configuration parameter set is shared by multiple merchant devices may be defined.

If the UWB configuration parameter set includes a controller MAC address, the session associated with the UWB configuration parameter set may be dedicated to a device with a specific controller MAC address and that session may not be shared with other merchant devices for session initialization.

FIGS. 12A and 12B illustrate an example of a tap-free payment method according to an embodiment of the disclosure.

FIGS. 12A and 12B illustrate a flow example between various entities related to retail tap-free payment. The overall operation may be composed of a Service initialization phase, a Secure ranging preparation phase, a Secure ranging phase, and a Payment transaction phase.

In the Service initialization phase, the customer device (or user device) may run the payment application. In the Secure ranging preparation phase, the customer device and merchant device may select each other and negotiate what is useful for identifying and/or verifying each other. In the Secure ranging phase, secure ranging between the customer device and merchant device may be performed. In the Payment transaction phase, a user verification/validation procedure is performed if necessary, and payment transactions are performed using data transmission within the UWB band.

According to an embodiment, some of the four phases may be omitted depending on the payment scenario.

### < 1. Service initialization phase >

In operation 1201, the payment infrastructure may support the use of an OOB mechanism (e.g., BLE) to automatically wake up the UWBS of the customer device and provide store information to the customer device. In operation 1202, the user device (or customer device) may execute the payment application, and the payment application may drive UWBS on the customer device. In operation 1203, the payment application may start in-band service discovery. In this case, the merchant device and/or payment infrastructure may transmit an in-band service discovery message and the customer device may receive the message to identify the service and prepare for the next procedure.

### < 2. Secure ranging preparation phase >

In operation 1204, the payment infrastructure may support an untracked navigation service for the customer device to estimate in-store location as a background task. The untracked navigation service supported by the payment infrastructure may provide location accuracy as required by the store. For example, 1) sufficient location accuracy to determine which merchant device is closest among multiple merchant devices in the store, or 2) sufficient location accuracy to identify the table number/area where the customer is positioned may be provided. According to an embodiment, a recommended distance between two adjacent merchant devices or checkout counters may be specified so that the two devices may be clearly distinguished using localization technology under specific precision.

In operation 1205, the customer device and merchant device (or UWB device of the payment infrastructure) may detect each other based on two-way ranging.

In operation 1206, the customer device may select one merchant device (or UWB device of the payment infrastructure) to perform secure ranging when multiple merchant devices are detected (e.g., when the user selects one of the merchant devices displayed on the UI or indicates one of the merchant devices to proceed with the payment procedure). The merchant device (or UWB device of the payment infrastructure) may select one customer device to perform secure ranging (e.g., manual verification of device identifier/user identifier by staff). The customer device and merchant device selected at this stage must be positioned within each other's payment-available zone.

### < 3. Secure ranging phase >

In operation 1207, the customer device and merchant device/payment infrastructure may establish a UWB secure ranging session through either in-band or OOB methods. The customer device and merchant device/payment infrastructure may perform UWB secure ranging before performing payment transactions.

### < 4. Payment transaction phase >

In operation 1208, the customer device may require user intent/confirmation before performing a payment transaction. The method of obtaining user intent/confirmation for payment may be determined according to the payment service. For example, biometric-based user authentication methods, facial recognition, PIN number entry, clicking a confirmation button, etc. may be methods for obtaining user intent/confirmation. The customer device and merchant device may perform payment transactions with a sufficient level of security to meet the security requirements required by the service provider.

In operation 1209, the customer device may perform a configured payment method (e.g., online in-app payment) to complete the payment procedure.

FIG. 13 illustrates operations of devices in a service initialization phase according to an embodiment of the disclosure.

Referring to FIG. 13, in the Service initialization phase, the customer device may receive an Advertisement message from at least one of the UWB/BLE Advertiser and merchant device. According to an embodiment, the advertisement message may be a BLE advertisement packet or a UWB advertisement message. According to an embodiment, the advertisement message may include at least one of a UWB configuration parameter set, a service identifier, or a retail identifier.

The UWB configuration parameter set may include parameters regarding the ranging method that the customer device must operate for payment.

The service identifier may be used to identify a specific payment service. By using the payment service identifier, the customer device may recognize at least one of supported payment applications, a required UWB feature set, or supported payment transaction protocols. According to an embodiment, the payment service identifier may be associated with supported encryption algorithms and security protocols that may be used to establish UWB secure ranging and/or secure data transmission sessions between the customer device and merchant device.

Upon receiving the BLE advertisement packet, the customer device may perform one of the following procedures 1), 2):
1) Prepare to start a UWB session and/or set of UWB ranging methods using an appropriate UWB configuration parameter set mapped to the payment service identifier; the UWB session may be initialized when the user starts the appropriate payment application.
2) Automatically start one of the payment applications supported by the store; if the user has configured the payment application as the default application, the default payment application may automatically start in the background.

According to an embodiment, in the Service initialization phase, to complete a payment transaction with the Retail Tap-Free Payment service, the customer device may obtain at least one information among a payment service identifier, a retail identifier, a list of UWB ranging methods, and UWB ranging order. The customer device may obtain the at least one information through BLE advertisement packets from BLE devices deployed in the store or UWB advertisement messages sent by UWB Advertisers.

The tasks performed by the customer device in the service initialization phase may be classified into two types depending on whether the user needs to execute a specific payment application to receive advertisement messages sent by UWB advertisers or BLE advertisers deployed in the store or merchant device..
- Service initialization in foreground: In this type of service initialization, the customer device may receive advertisement messages only when the user executes a specific payment application.
- Service initialization in background: In this type of service initialization, the customer device may receive advertisement messages in background mode.

In the disclosure, the payment application must satisfy the following requirements:
- the payment application may be a FiRa-enabled application defined in the FiRa CSML specification.
- the payment application may start UWB services through the framework API defined in the FiRa CSML specification.
- the payment application may receive BLE advertisement packets based on FiRa out-of-band (OOB) channels supporting BLE advertisement.
- The Payment Application may start UWB services corresponding to information included in BLE advertisement packets received through FiRa OOB channels.
- the payment application may access the FiRa payment profile manager using the framework API.
- The payment application may register with the FiRa framework through the FIRAServiceInit API as defined in Section 10.3.1 of the FiRa CSML specification before starting the first retail tap-free payment service.

According to an embodiment, the payment application uses the FIRAServiceInit() function with the following parameters:
- ServiceConfiguration defined in Section 10.3.1.1 of the FiRa CSML specification
- UWBConfiguration defined in Section 10.3.1.2 of the FiRa CSML specification
- OOBConfiguration defined in Section 10.3.1.3 of the FiRa CSML specification

FIG. 14 illustrates operations of devices in a secure ranging preparation phase according to an embodiment of the disclosure.

In the secure ranging preparation phase, a Merchant Device discovery procedure may be performed. Contention-based ranging may be used by default during the merchant device discovery procedure.

The merchant device may perform the Controller/Initiator role of contention-based ranging. When there are multiple merchant devices, the merchant devices may start UWB sessions aligned with the reference session generated by the Time Reference Device using appropriate time offsets to avoid collisions between UWB messages of the merchant devices.

The customer device may perform the Controlee/Responder role of contention-based ranging. The customer device may respond to one of the merchant devices in the payment-available zone.

Referring to FIG. 14, the customer device may receive RIM from the UWB anchor and transmit RRM corresponding to the RIM to the UWB anchor. The customer device may receive RIM from the merchant device and transmit RRM corresponding to the RIM to the merchant device.

According to an embodiment, when two or more merchant devices are discovered within the payment-available zone at the customer device, the customer device may select one of the merchant devices to establish a secure ranging session and/or secure data transmission session.

According to an embodiment, the customer device and merchant device may establish a secure ranging session without OOB and securely perform payment transactions through the secure ranging session.

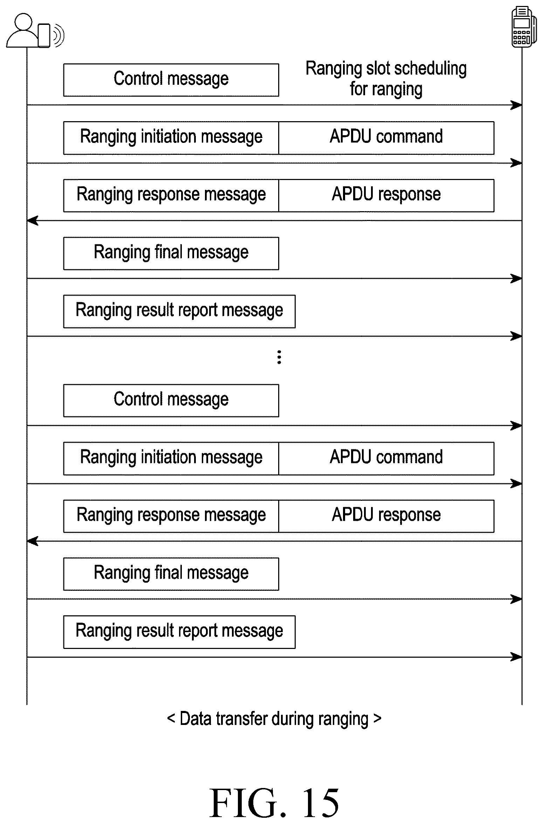

FIG. 15 illustrates an example of data exchange operation during ranging according to an embodiment of the disclosure.

The customer device and merchant device may exchange data for the payment protocol during Two-Way ranging. In this case, a data transmission during ranging method may be used as the ranging method.

Referring to FIG. 15, the customer device may transmit a control message including ranging slot scheduling information for ranging to the merchant device. The customer device may transmit a RIM (ranging initiation message) and APDU command to the merchant device. The merchant device may transmit a RRM (ranging response message) and APDU response to the customer device. Thereafter, the customer device may transmit a ranging final message to the merchant device and receive a ranging result report message from the merchant device.

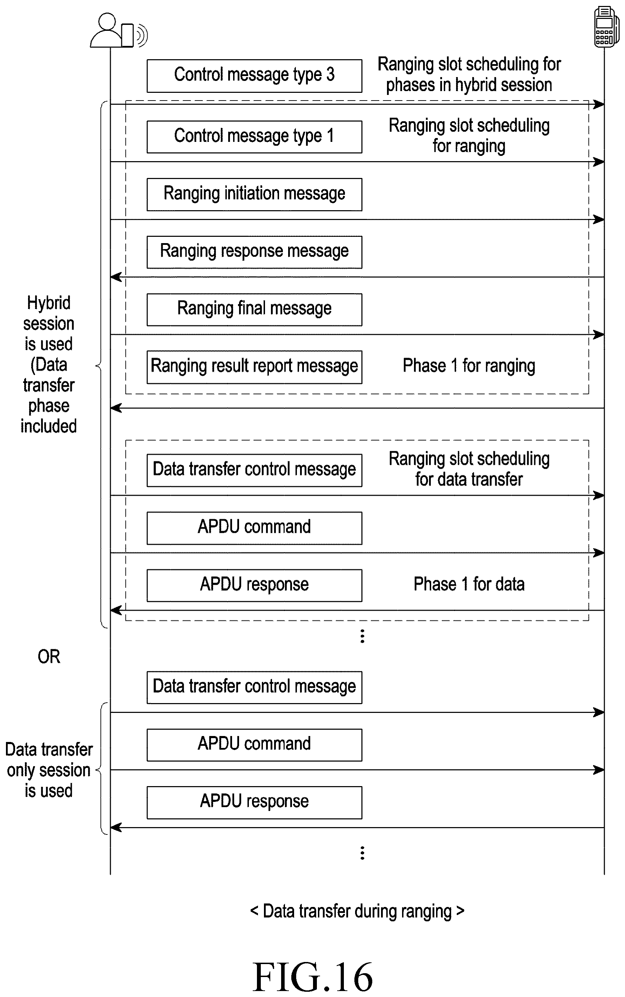

FIG. 16 illustrates an example of payment transaction data exchange operation through a data transmission phase or session according to an embodiment of the disclosure.

The customer device and merchant device may exchange data for the payment protocol through a dedicated session or phase for data transmission. In this case, the customer device and merchant device may configure a dedicated session for data transmission or a data transmission phase as a secondary session of the hybrid session.

Referring to FIG. 16, the customer device may transmit a control message type 3 including ranging slot scheduling information for phases in the hybrid session to the merchant device.

According to an embodiment, when a hybrid session including a data transfer phase is used, Phase 1 for ranging and Phase 1 for data may be performed.

### <Phase 1 for ranging>

The customer device may transmit a control message type 1 including ranging slot scheduling information for ranging to the merchant device. The customer device may transmit a RIM (ranging initiation message) to the merchant device. The merchant device may transmit a RRM (ranging response message) corresponding to the RIM to the customer device. Thereafter, the customer device may transmit a ranging final message to the merchant device and receive a ranging result report message from the merchant device.

### <Phase 1 for data>

The customer device may transmit a data exchange control message including ranging slot scheduling information for data transfer to the merchant device. The customer device may transfer an APDU command to the merchant device, and the merchant device may transfer an APDU response to the customer device.

According to an embodiment, when a dedicated data transfer session is used, the customer device may transmit a data exchange control message to the merchant device. The customer device may transfer an APDU command to the merchant device, and the merchant device may transfer an APDU response to the customer device.

Meanwhile, a feature profile and a device profile may be configured to support the Retail Tap-Free Payment service.

According to an embodiment, technical features required between the customer device and merchant device may be configured as shown in Table 4.

**[Table 4]**

| Component | Features | M/O |
|---|---|---|
| FiRa Framework | | |
| Service Interface | | |
| FiRa Profile Manager | Can manage and execute various ranging methods in a given order | O |
| | For example, | |
| | Start payment service discovery with BLE OOB or | |
| | UWB Advertisement | |
| | Start TWR in time-scheduled or contention mode depending on the service type supported by the store | |
| | Parsing application data in Payload IE | |
| Secure Component | Required to support Dynamic STS and perform payment protocol with payment applet in SE | CM |
| Type of STS | Static STS | |
| | Dynamic STS | |
| | Provisioned STS | |
| UWB MAC | Time-scheduled TWR | |
| | Contention-based TWR | |
| | OWR for AoA measurement | |
| | OWR UL-TDoA | |
| | OWR DL-TDoA | |
| | Data Transfer during Ranging | |
| | Data Transfer phase | |
| | Hybrid ranging | |
| UWB PHY | | |

The Contention-based TWR feature of the UWB MAC component is mandatory, and all payment service types may use contention-based ranging for device discovery.

The OWR DL-TDoA feature of the UWB MAC component may be required when DL-TDoA must be used for customer devices to estimate in-store location in certain payment services and use it to determine whether to join and respond to a specific merchant device.

The Data Transfer during Ranging feature of the UWB MAC component is mandatory, and during contention-based ranging, data transfer during ranging needs to be supported to exchange user/store information and notify customer consent/confirmation before establishing secure ranging or data transmission phase for payment transactions.

The Data Transfer phase feature of the UWB MAC component may support the Data Transfer Phase when the payment service performs payment transactions via UWB using connection-oriented data transfer.

The Hybrid ranging feature of the UWB MAC component is mandatory, and both merchant devices and customer devices need to support hybrid UWB sessions to manage contention-based ranging and data transmission phases in an efficient manner.

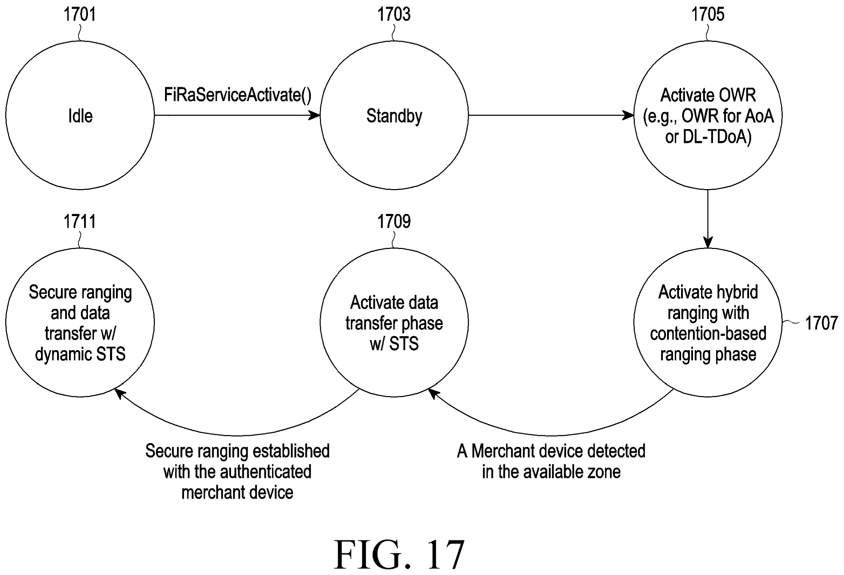

FIG. 17 illustrates an example of a state transition diagram according to an embodiment of the disclosure.

The Payment Profile Manager of the FiRa Framework may manage a state transition diagram to sequentially execute various ranging methods step by step.

State transitions may occur by user activity through the user interface of the payment application or successful completion of procedures that must be performed in the current state through the ongoing ranging method. The payment service identifier may specify a state transition diagram including the set of ranging methods used in the state and state transition criteria.

Referring to FIG. 17, the states proposed in the disclosure may include an Idle state (1701), a Standby state (1703), an Activate OWR state (1705) (e.g., OWR for AoA or DL-TDoA), an activate hybrid ranging through contention-based ranging phase state (1707), an activate data transfer phase using STS state (1709), and a secure ranging and data transfer using dynamic STS state (1711).

According to an embodiment, the Idle state (1701) may transition to the Standby state (1703) based on the FiRaServiceActivate() command. According to an embodiment, if a merchant device is detected in the payment-available zone, the activate hybrid ranging through contention-based ranging phase state (1707) may transition to the activate data transfer phase using STS state (1709). According to an embodiment, if secure ranging is established with an authenticated merchant device, the activate data transfer phase using STS state (1709) may transition to the secure ranging and data transfer using dynamic STS state (1711).

In the disclosure, the Payment Application configuration may be a configuration that the payment application of the customer device must set through the FIRAServiceinit() API.

In the Service Configuration, the profile ID of the Retail Tap-Free Payment profile may be set to, e.g., "XX", and the profile ID value may be advertised in the device and service discovery phase. The profile ID value may be used in the FIRAServiceinit() API defined in [CSML].

According to an embodiment, the Service Configuration used for the Retail Tap-Free Payment service may be configured as shown in Table 5.

**[Table 5]**

| Parameter | Value | Type | Description |
|---|---|---|---|
| Profile ID | XX | Integer | Identifier of Retail Tap-Free Payment Profile |
| profilePriority | Assigned by platform | Integer | Priority of FiRa profile instance. This is used when appropriately allocating resources in the FiRa framework. |
| | | | 1 = Highest priority; 100 = Lowest priority |
| | | | The use of profile priority may vary depending on the platform. |
| serviceDeploymentOption | 4 | Integer | Indicates selected deployment option. |
| | | | 1 = payment service scenario 1 |
| | | | 2 = payment service scenario 2 |
| | | | 3 = payment service scenario 3 |
| | | | 4 = payment service scenario 4 |
| serviceAppletID | N/A | Integer | AID of payment applet to be used in the FiRa framework |
| serviceAdfID | N/A | Integer | tag OID of ADF used in the deployment of payment service |
| ConfigurationID | | Integer | ID with predefined configuration to be used |

According to an embodiment, a Service Configuration for OWR for AoA measurement ranging method may be configured.

According to an embodiment, when the FiRa retail payment service utilizes OWR for AoA measurement ranging method as one of the ranging methods to be used in the payment infrastructure, the ServiceConfiguration may be set through the FIRAServiceinit() API by the FiRa-enabled application on the customer device.

According to an embodiment, the Service Configuration used on the customer device to start the advertising service for the FiRa retail payment service may be configured as shown in Table 6.

**[Table 6]**

| Parameter | Value | Type | Description |
|---|---|---|---|
| Profile ID | 3 | Integer | Identifier of the FiRa profile supported by the FiRa-enabled application. |
| | | | In the case of the FiRa profile, ProfileID defined in the corresponding FiRa profile specification is necessary, and it is not needed to configure UWB configuration and OOB configuration (since it is specified in FiRa profile specification, and known to FiRa framework). |
| | | | For user-defined configuration, FiRa-enabled applications should set ProfileID to 255 and transmit UWB configuration and OOB configuration. |
| profilePriority | Assigned by platform | Integer | Priority of the FiRa profile instance. This is used when appropriately allocating resources in the FiRa framework. |
| | | | 1 = Highest priority; 100 = Lowest priority |
| | | | The use of profile priority may differ depending on the platform. |
| serviceDeploymentOption | 4 | Integer | Indicates the selected deployment option. |
| | | | 1 = payment service deployment scenario 1 |
| | | | 2 = payment service deployment scenario 2 |
| | | | 3 = payment service deployment scenario 3 |
| | | | 4 = payment service deployment scenario 4 |
| serviceAppletlD | N/A | Integer | AID of payment applet to be used in the FiRa framework |
| serviceAdflD | N/A | Integer | Tag OID of ADF used in the service deployment |
| ConfigurationID | | Integer | ID with predefined configuration to be used |

According to an embodiment, the Service Configuration for DL-TDoA may be one of the ranging methods to be used in the payment infrastructure for the FiRa retail payment service. When utilizing the DL-TDoA ranging method, the following Service Configuration may be set through the FIRAServiceinit() API through the FiRa-enabled application on the customer device.

According to an embodiment, the ServiceConfiguration used by the customer device to start the DL-TDoA service for the FiRa retail payment service may be configured as shown in Table 7.

**[Table 7]**

| Parameter | Value |
|---|---|
| profileID | 2 |
| serviceDeploymentOption | 4 |
| serviceAppletID | N/A |
| serviceAdfID | N/A |
| serviceInfo | DT-Anchors' coordinates |
| configurationID | ID with predefined configuration to be used |

According to an embodiment, all other parameters of ServiceConfiguration defined in the FiRa Consortium Common Service and Management Layer Technical Specification may be configured by the FiRa-enabled application provider using the FIRAServiceinit() API.

According to an embodiment, a Common UWB configuration for OWR for AoA measurement session may be configured. Table 8 includes the UWB configuration parameter set that must be used by the payment infrastructure or merchant device when initializing OWR for AoA measurement ranging session. In other words, Table 8 includes the object UWBConfiguration used for OWR for AoA measurement session of the FiRa retail payment service.

**[Table 8]**

| **Parameter** | **Value** | **Description** |
|---|---|---|
| **UWBRole** | **5** | **4: Advertiser** |
| | | **5: Observer** |
| **rangingRoundUsage** | **6** | **6: OWR for AoA measurement** |
| **multiNodeMode** | **1** | **0: Unicast Ranging** |
| | | **1: One-to-many Ranging** |
| | | **2: Many-to-many Ranging** |
| **RFRAMEConfiguration** | **1** | **1: SP1** |
| **STSConfig** | **0** | **0: Static STS** |
| **roundHopping** | **N/A** | |
| **scheduledMode** | **N/A** | |
| **maximumContentionPhaseLength** | **N/A** | |
| **ToFReport** | **N/A** | |
| **AoAAzimuthReport** | **N/A** | |
| **AoAElevationReport** | **N/A** | |
| **AoAFOMReport** | **N/A** | |
| **blockStriding** | **N/A** | |
| **slotDuration** | **N/A** | |
| **slotsPerRangingRound** | **N/A** | |
| **rangingInterval** | **200** | |
| **txDelavValue** | **1** | |
| **mtuSize** | **250** | |
| **minFramesPerRR** | **4** | |
| **channelNumber** | **9** | |
| **preambleCodeIndex** | **27** | |
| **PRF Mode** | **HPRF** | |
| **SPOPHYParameterSet** | **N/A** | |
| **SP1PHYParameterSet** | **6** | |
| **SP3PHYParameterSet** | **N/A** | |
| **maxRetry** | **N/A** | |
| **constraintLengthConvolutionalCode** | **3** | |
| **UWBInitiationTime** | **N/A** | |
| **kevRotationRate** | **N/A** | |
| **MACFCSType** | **16 byte** | |
| **RangingRoundControl** | **N/A** | |
| **vendorlD** | **0x5A18** | **16-bit unsigned integer, vendor unique ID. In this context, the vendor is a FiRa-enabled application provider.** |
| | | **This is used to set phyUpper64[15:0] as defined in the FiRa MAC technical requirements.** |
| **STSIV** | **0x4649524153500A** | |

According to an embodiment, all other parameters of UWBConfiguration in Section 12.2.3 of the FiRa Consortium Common Service and Management Layer Technical Specification may be configured by the FiRa-enabled application provider using the FIRAServiceinit() API or FiRa UWB framework.

Table 9 may specify the UWB configuration parameter set that the customer device must use when the payment infrastructure or merchant device set activates a DL-TDoA session.

Table 9 may include the object UWBConfiguration to be used by the customer device for the DL-TDoA session for the FiRa retail payment service.

**[Table 9]**

| **Parameter** | **Value** |
|---|---|
| **UWBRole** | **4 (DT-Tag)** |
| **rangingRoundUsage** | **5 (DL-TDoA)** |
| **multiNodeMode** | **N/A** |
| **RFRAMEConfiguration** | **1 (SP1)** |
| **STSConfig** | **0 (Static STS)** |
| **roundHopping** | **N/A** |
| **scheduledMode** | **N/A** |
| **maximumContentionPhaseLenqth** | **N/A** |
| **ToFReport** | **N/A** |
| **AoAAzimuthReport** | **N/A** |
| **AoAElevationReport** | **N/A** |
| **AoAFOMReport** | **N/A** |
| **blockStriding** | **N/A** |
| **slotDuration** | **N/A** |
| **slotsPerRangingRound** | **N/A** |
| **rangingInterval** | **N/A** |
| **channelNumber** | **Need to be set** |
| **preambleCodeIndex** | **Need to be set** |
| **SP0PHYParameterSet** | **N/A** |
| **SP1PHYParameterSet** | **N/A** |
| **SP3PHYParameterSet** | **N/A** |
| **maxRetry** | **N/A** |
| **constraintLengthConvolutionalCode** | **N/A** |
| **UWBinitiationTime** | **N/A** |
| **keyRotationRate** | **N/A** |
| **MACFCSType** | **N/A** |
| **RangingRoundControl** | **N/A** |
| **vendorlD** | **Need to be set** |
| **staticSTSIV** | **Need to be set** |

According to an embodiment, all other parameters of UWBConfiguration defined in the FiRa Consortium Common Service and Management Layer Technical Specification may be configured by the FiRa-enabled application using the FIRAServiceinit() API.

Table 10 includes the UWB PHY parameter set configured to be used in contention-based ranging for the FiRa retail payment service.

**[Table 10]**

| **Parameter** | **Notes** | **Default Value** |
|---|---|---|
| **PREAMBLE_DURATION (i.e. SYNC PSR)** | **0: 32 symbols for HPRF** | **1** |
| | **1: 64 symbols for BPRF and HPRF** | |
| **SFD_ID** | **[0, 2]: BPRF** | **2** |
| | **[1, 2, 3, 4]: HPRF** | |
| **NUMBER_OF_STS_SEGMENTS** | **0: If not STS frame, no STS segment (e.g., when RFRAME_CONFIG=0)** | **1** |
| | **1: If STS frame, 1 STS segment (RFRAME_CONFIG = 1 or 3)** | |
| | **2: If STS frame (RFRAME_CONFIG = 1 or 3), 2 STS segments (HPRF only)** | |
| | **3: If STS frame (RFRAME_CONFIG = 1 or 3), 3 STS segments (HPRF only)** | |
| | **4: If STS frame (RFRAME_CONFIG = 1 or 3), 4 STS segments (HPRF only)** | |
| **PSDU_DATA_RATE** | **0: 6.81 Mbps** | **0** |
| | **1: 7.80 Mbps** | |
| | **2: 27.2 Mbps** | |
| | **3: 31.2 Mbps** | |
| | **4: 850 Kbps** | |
| **STS_LENGTH** | **STS segment symbol count** | **1** |
| | **0 = 32 symbols** | |
| | **1 = 64 symbols** | |
| | **2 = 128 symbols** | |
| | **3 = RFU** | |
| | **Note: Not applied if SP0 PHY Set(#0) is set to 2** | |

Table 11 includes the object UWBConfiguration to be used by the merchant device for contention-based ranging for the FiRa retail payment service.

**[Table 11]**

| **Parameter** | **Value** | **Notes** |
|---|---|---|
| RFRAME_CONFIG | 1 | SP1 RFRAMES |
| RANGING_ROUND_USAGE | 3 | Configured ranging round(s) fulfills a complete ranging cycle for Non-deferred SS-TWR |
| MULTI_NODE_MODE | 1 | One initiator to multiple responders |
| SCHEDULED_MODE | 0 | Contention-based ranging |
| DEVICE_ROLE | 1 | Role of the device: Initiator |
| DEVICE_TYPE | 1 | Type of the device: Controller |
| RANGING_ROUND_CONTROL | 6 | b0 = 0 (ignored for Contention-based ranging) |
| | | b1 = 1 (Controller shall send a CM in-band and a Controlee shall expect a CM in-band) |
| | | b2 = 1 (RCP is excluded in Ranging Round) |
| | | b6 to b3 = RFU |
| | | b7 = 0 (ignored for this RANGING_ROUND_USAGE is non-deferred SS-TWR) |
| CAP_SIZE_RANGE | 0x18 | Minimum CAP = 15 slots |
| | 0F | Maximum CAP = 24 slots |
| MAX_NUMBER_OF_MEASUREMENTS | 50 | Number of range-measurement cycle is set to 50 |
| SLOT_DURATION | 2400 | Duration of a ranging slot in the unit of RSTU |
| SLOTS_PER_RR | 25 | Duration of the ranging round in units of Slot Duration |

Table 12 includes the entity UWBConfiguration to be used by the customer device for contention-based ranging for the FiRa retail payment service.

**[Table 12]**

| **Parameter** | **Value** | **Notes** |
|---|---|---|
| RFRAME_CONFIG | 1 | SP1 RFRAMES |
| RANGING_ROUND_USAGE | 3 | Configured ranging round(s) fulfills a complete ranging cycle for Non-deferred SS-TWR |
| MULTI_NODE_MODE | 1 | One initiator to multiple responders |
| SCHEDULED_MODE | 0 | Contention-based ranging |
| DEVICE_ROLE | 0 | Role of the device: Responder |
| DEVICE_TYPE | 0 | Type of the device: Controlee |
| MAX_NUMBER_OF_MEASUREMENTS | 50 | Number of range-measurement cycle is set to 50 |
| RANGING_ROUND_CONTROL | 6 | CM is present and RCP is not present |
| | | b0 = 0 (ignored for Contention-based ranging) |
| | | b1 = 1 (Controller shall send a CM in-band and a Controlee shall expect a CM in-band) |
| | | b2 = 1 (RCP is excluded in Ranging Round) |
| | | b6 to b3 = RFU |
| | | b7 = 0 (ignored for this RANGING_ROUND_USAGE is SS-TWR with Non-deferred Mode) |
| SLOT_DURATION | 2400 | Duration of a ranging slot in the unit of RSTU |
| SLOTS_PER_RR | 25 | Duration of the ranging round in units of Slot Duration |

Table 13 includes the parameters of OOBConfiguration.

**[Table 13]**

| **Parameters** | **Value** | **Description** | |
|---|---|---|---|
| | | | |
| **OOBType** | **0** | **This indicates the type of OOB connection used for FiRa Service establishment** | |
| | | **o None - value '0'** | |
| | | **o Bluetooth LE - value '1'** | |
| | | **o RFU - all other values** | |
| **OOBBLERole** | **N/A** | **This indicates the role of FiRa Device for OOB GAP and GATT** | |
| | | | **• Scanner/Central & GATT Client (CP) Value 0** |
| | | | **• Advertiser/Peripheral & GATT Server (FCS) Value 1** |
| | | | **• Peripheral Value 2** |
| | | | **• Central. Value 3** |

According to an embodiment, when the device supports the GAP observer role, the OOBBLERole parameter of Table 13 may use a value of 3.

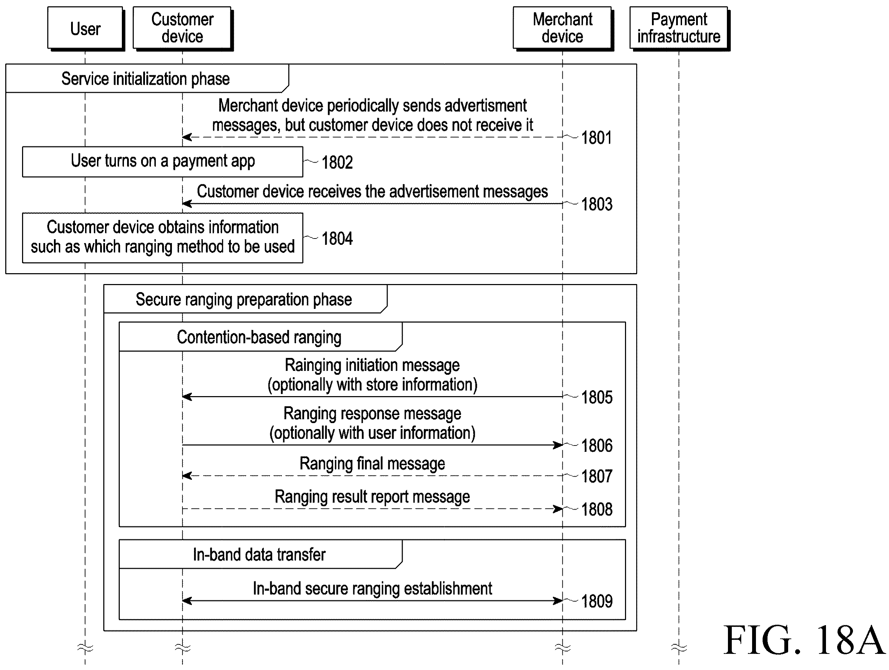

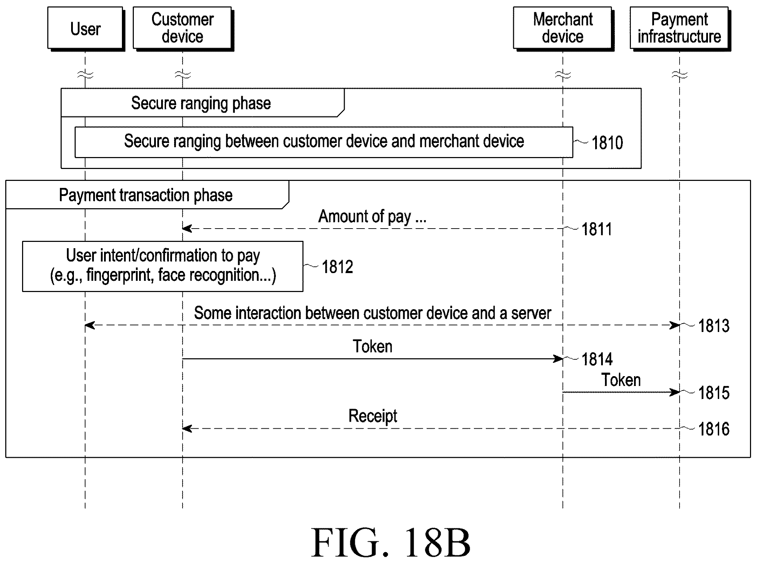

FIGS. 18A and 18B illustrate an example of secure ranging and payment transaction phases according to an embodiment of the disclosure.

The overall operation shown in FIGS. 18A and 18B may be composed of a Service initialization phase, a Secure ranging preparation phase, a Secure ranging phase, and a Payment transaction phase.

### <Service initialization phase>

In operation 1801, the merchant device periodically transmits Advertisement messages but the customer device may not receive those Advertisement messages. In operation 1802, the customer device may execute the payment application in response to a user input. In operation 1803, the customer device may receive the Advertisement message transmitted by the merchant device. In operation 1804, the customer device may obtain information such as the ranging method to be used.

### <Secure ranging preparation phase>

During contention-based ranging, in operation 1805, the merchant device may transmit RIM to the customer device. According to an embodiment, the RIM may include store information. In operation 1806, the customer device may transmit RRM corresponding to the RIM to the merchant device. According to an embodiment, the RRM may include user information. In operation 1807, the merchant device may transmit a ranging final message to the customer device. In operation 1808, the customer device may transmit a ranging result report message to the merchant device.

During in-band data transfer, in operation 1809, the customer device and merchant device may establish settings for in-band secure ranging.

### <Secure ranging phase>

In operation 1810, the customer device and merchant device may perform secure ranging.

### <Payment transaction phase>

In operation 1811, the merchant device may transmit payment information (e.g., amount of pay) to the customer device. In operation 1812, the customer device may confirm user intent/confirmation for payment processing (e.g., fingerprint, facial recognition, etc.).

In operation 1813, interaction between the customer device and a server in the payment infrastructure may be performed. In operation 1814, the customer device may transmit a token to the merchant device. In operation 1815, the merchant device may forward the received token to the payment infrastructure. In operation 1816, the server in the payment infrastructure may transfer receipt information corresponding to the payment to the customer device.

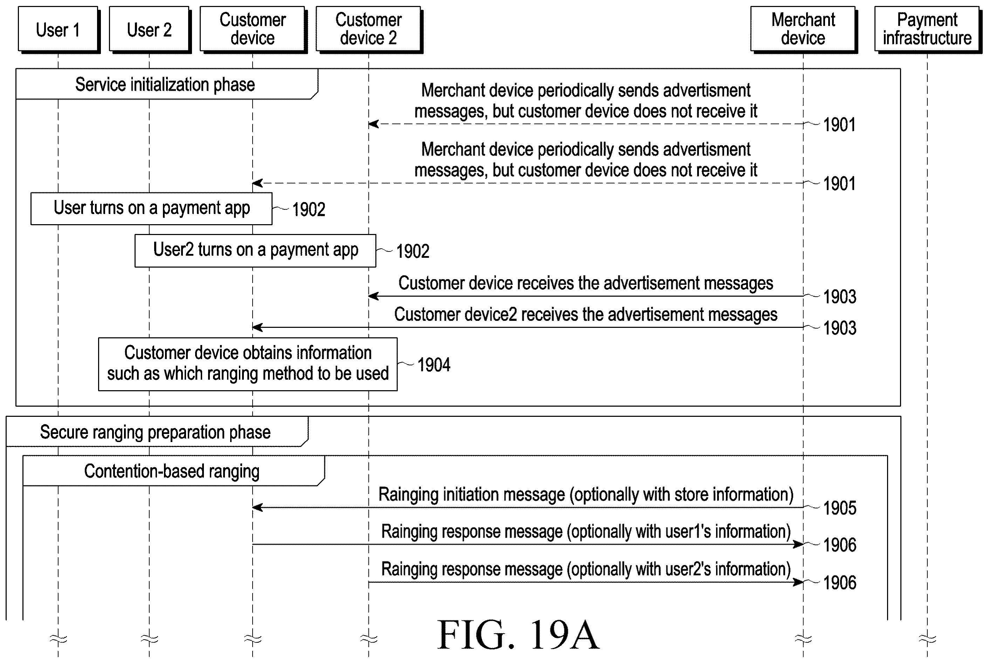

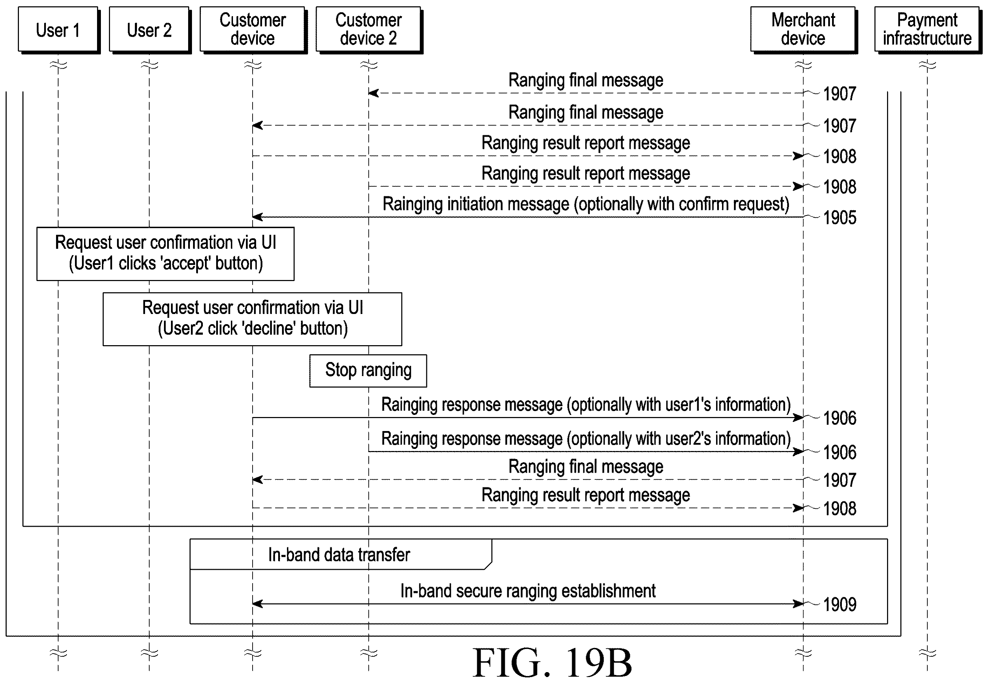

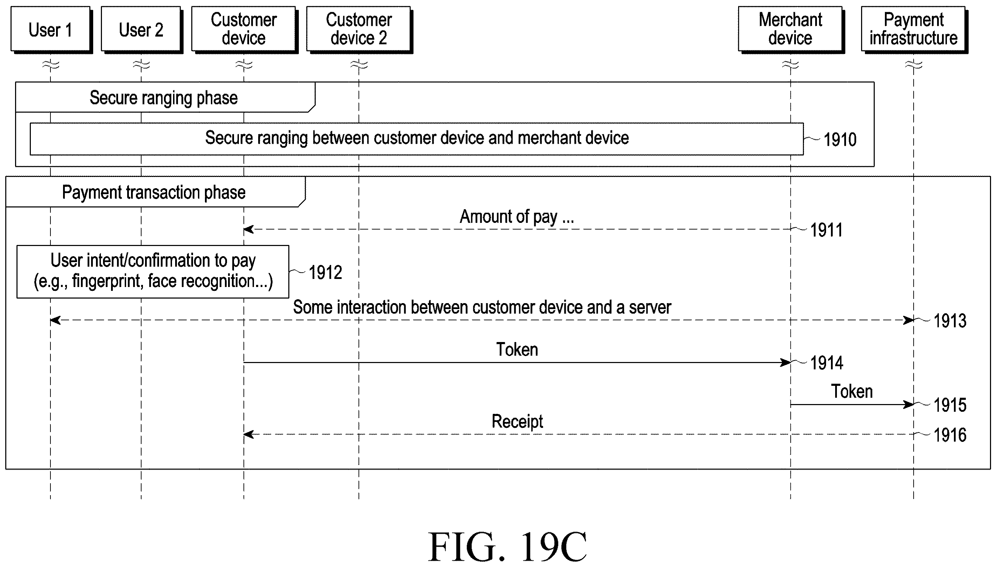

FIGS. 19A, 19B, and 19C illustrate another example of secure ranging and payment transaction phases according to an embodiment of the disclosure.

The overall operation shown in FIGS. 19A, 19B, and 19C may be composed of a Service initialization phase, a Secure ranging preparation phase, a Secure ranging phase, and a Payment transaction phase. While FIG. 18 shows one customer device proceeding with a payment transaction with a merchant device, FIG. 19 illustrates an example in which multiple customer devices proceed with payment transactions with a merchant device.

### <Service initialization phase>

In operation 1901, the merchant device periodically transmits Advertisement messages but the first customer device and second customer device may not receive those Advertisement messages. In operation 1902, each of the first customer device and second customer device may execute the payment application in response to a user input. In operation 1903, each of the first customer device and second customer device may receive the Advertisement message transmitted by the merchant device. In operation 1904, each of the first customer device and second customer device may obtain information such as the ranging method to be used.

### <Secure ranging preparation phase>

During contention-based ranging, in operation 1905, the merchant device may transmit RIM. According to an embodiment, the RIM may include store information. In operation 1906, each of the first customer device and second customer device may transmit RRM corresponding to the RIM to the merchant device. According to an embodiment, the RRM may include user information. In operation 1907, the merchant device may transmit a ranging final message to each of the first customer device and second customer device. In operation 1908, each of the first customer device and second customer device may transmit a ranging result report message to the merchant device.

Thereafter, again in operation 1905, the merchant device may transmit RIM including a confirmation request. Each of the first customer device and second customer device may request user confirmation through the UI (e.g., user's 'accept' or 'decline' button input). If the first user of the first customer device inputs the 'accept' button and the second user of the second customer device inputs the 'decline' button, the second customer device may discontinue the ranging procedure.

Thereafter, again in operation 1906, the first customer device may transmit RRM including confirmation response (accept) to the merchant device. In operation 6, the second customer device may transmit RRM including confirmation response (decline) to the merchant device. In operation 1907, the merchant device may transmit a ranging final message to the first customer device. In operation 1908, the first customer device may transmit a ranging result report message to the merchant device.

During in-band data transfer, in operation 1909, at least one of the first customer device and second customer device and the merchant device may establish settings for in-band secure ranging.

### <Secure ranging phase>

In operation 1910, the first customer device and merchant device may perform secure ranging.

### <Payment transaction phase>

In operation 1911, the merchant device may transmit payment information (e.g., amount of pay) to the first customer device. In operation 1912, the first customer device may confirm user intent/confirmation for payment processing (e.g., fingerprint, facial recognition, etc.).

In operation 1913, interaction between the first customer device and a server in the payment infrastructure may be performed. In operation 1914, the first customer device may transmit a token to the merchant device. In operation 1915, the merchant device may forward the received token to the payment infrastructure. In operation 1916, the server in the payment infrastructure may transfer receipt information corresponding to the payment to the first customer device.

Meanwhile, when there are two or more merchant devices in a store, a controller role of contention-based ranging session may be required for the purpose of searching for nearby customer devices.

### <Merchant Device>

Since contention-based ranging sessions initiated by merchant devices operate individually without a coordination mechanism, collisions and interference between contention-based ranging sessions may occur, causing problems in efficient use of UWB channels in the store or reducing customer device discoverability. Due to frequent and periodic collisions/interference between merchant devices and customer devices, payment transactions may not be successfully completed before timeout.

To solve the above problem, merchant devices may open contention-based ranging sessions in an aligned manner according to the coordination mechanism. One of the options is to use the 'Reference Session' concept.

For 'D2D Payment with Infrastructure', the payment infrastructure may operate OWR for AoA measurement session or DL-TDoA session. One of the OWR sessions may be a reference session and may provide a reference for the ranging block structure that other sessions must follow to align all sessions initiated by the payment infrastructure and merchant devices in a common ranging block structure.

For 'D2D Payment', the merchant may select one of the merchant devices as the reference time device that starts the session by setting the first octet of the SESSION_TIME_BASE application configuration parameter to 0b0 (i.e., enabled). It must be a time base reference for other sessions, and other merchant devices may open sessions using the primary merchant device's session as a reference session.

The following steps 1), 2) show an example of payment infrastructure and merchant device operations in a multiple merchant device scenario.

### Step 1) Start reference session

The reference session may be opened before all other sessions initiated by the payment infrastructure and merchant devices in the store.

### Step 2) Start remaining sessions sequentially

When the reference session is a DL-TDoA session, for simplification, the active ranging round may start from the first ranging round (i.e., ranging round index 0). If the number of active ranging rounds of the DL-TDoA session is N_{d1}, the round duration is Tᵣ, and the ranging interval is T_{b}, the second session may start the session using the DL-TDoA session as the reference session and T_{offset} as the reference session. To avoid collision and interference between the first session and the second session, T_{offset} should be greater than N_{d1}Tᵣ.

The reference session, offset value, and active period of a specific session may be included as part of the UWB configuration. This may help other merchant devices understand which offset value the previous session starts with so that the next session may start with an appropriate offset value. If the active period of the second session is ${T}_{act}^{{s}_{2}}$, the next third session may start the session using the first session as the reference session.

### <Customer Device>

The following steps 1), 2) show an example of the operation procedure of the customer device in a multiple merchant device scenario.

### Step 1) Payment service initialization through BLE/UWB advertisement

The BLE advertiser in the store may broadcast a BLE advertisement message including the UWB payment identifier, retail identifier, and UWB configuration parameter set ranging method used by the payment infrastructure and/or merchant devices in the store.

The UWB advertisement may include the UWB payment identifier, retail identifier, and UWB configuration parameter set. The UWB advertisement may include the UWB configuration parameter set for OWR for AoA measurement ranging method so that the customer device may start OWR for AoA measurement ranging method as the first UWB session to obtain the UWB payment identifier, retail identifier, and other UWB configuration parameter sets.

A customer device visiting the store may receive BLE/UWB Advertising and perform the following operations:
- The customer device may start the payment application installed on the device using the retail identifier included in the BLE/UWB advertisement. The payment application may have a UWB configuration parameter set. In this case, if the BLE/UWB advertisement does not include a list of UWB configuration parameter sets, the customer device may use the UWB configuration parameter set list.
- The customer device may start the UWB retail payment profile service using the UWB payment identifier included in the BLE/UWB advertisement. The UWB retail payment profile manager may have a list of UWB configuration parameter sets matching the received UWB payment identifier. In this case, if the BLE/UWB advertisement does not include a list of UWB configuration parameter sets, the customer device may use the UWB configuration parameter set list of the UWB retail payment profile manager.
- The customer device may open a UWB session using the first UWB configuration parameter set among the UWB configuration parameter set List included in the BLE/UWB advertisement.

Step 2) The customer device may start the first UWB session using the first parameter set in the UWB configuration list except for OWR for AoA measurement ranging method.

If the store supports DL-TDoA and indicates that the ranging method of the first UWB configuration parameter set is DL-TDoA, the customer device may start that UWB ranging session. If the ranging method of the first UWB configuration parameter set is one of the hybrid UWB sessions, the customer device may start the hybrid UWB session. Upon receiving control message type 3 of the hybrid UWB session, the customer device may check how many secondary sessions are included in that hybrid UWB session using which ranging method. If contention-based ranging is included as one of the secondary sessions of the hybrid UWB session, the customer device may participate in the secondary session using the UWB configuration parameter set included in the UWB configuration list.

A mechanism may be specified to determine whether the customer device may start a hybrid UWB session or start contention-based ranging. This mechanism may use the localization results of the downlink TDoA session. For example, the customer device may decide whether to participate in the session based on proximity to a specific merchant device or absolute/relative position in the store. The conditions may be specified in detail in the payment application identifiable by the retail identifier.

When the conditions for the customer device to respond to the ranging initiation message (RIM) of the merchant device are met, the customer device may transmit a ranging response message (RRM).

If the ranging method is SS-TWR contention-based ranging, the merchant device may measure the distance between the merchant device and the customer device. In this case, the merchant device may assign the discovered customer device to the RML of contention-based ranging (Section X.Y of MAC v2.0) and may transfer the ToF result measured in the previous ranging block as part of the DM Payload. For this, both the merchant device and customer device may configure contention-based ranging to enable data transmission during ranging. In addition to ToF results, the merchant device may piggyback other application data in the DM payload IE.

If the ranging method is DS-TWR contention-based ranging, both the merchant device and customer device may measure ToF. In this case, the merchant device may measure ToF based on SS-TWR when the customer device responds with response time in the RRM (Ranging Response Message), and the customer device may measure ToF based on DS-TWR.

When there are two or more merchant devices, a mechanism may be needed to determine which hybrid UWB session the customer device should participate in. The customer device may participate in only one hybrid UWB session based on proximity to a specific merchant device using the results of DL-TDoA. Alternatively, the customer device may participate in two or more hybrid UWB sessions to be discovered by two or more merchant devices. This gives two or more merchants the opportunity to decide whether to proceed with the remaining procedures with the discovered customer device.

Application data included in the DM Payload IE (i.e., application data of the DM Payload IE included in the UWB message as the second Payload IE of contention-based ranging that enables data transmission during ranging) may be specified.

Table 14 includes the content of application data transmitted in the DM payload IE transmitted by the customer device along with the RRM for contention-based ranging.

**[Table 14]**

| **Parameter** | **Size (bits)** | **Notes** |
|---|---|---|
| Type of Customer Identifi er | 8 | Type of Customer Identifier |
| | | 0x01: phone number |
| | | 0x02: user name |
| | | 0x03: user nickname |
| | | 0x04: user's membership ID |
| | | 0x05: RFU |
| Length of Customer Ident ifier | 8 | Size of Customer Identifier in Octet |
| Customer Identifier | Variable | The identifier of customer according to the value of Type of Cust omer Identifier field |
| User Consent Indicator | 8 | 0x00: reject |
| | | 0x01:accept for connection |
| | | 0x02: user verification is done by a verification method e.g., Card holder Verification Method (CVM). |
| | | 0x03:user consent for payment transaction is acquired (e.g., user' s fingerprint is verified) |
| TBD | | |

When the customer device and merchant device perform mutual device discovery while performing contention-based ranging, they may perform the data transfer during ranging function and exchange customer/store information simultaneously with ranging by attaching and transmitting (data piggyback) a Data Message IE to the ranging message. Table 14 above is the format of Application Data included in the Data Message IE carried on the ranging message during contention-based ranging, and information configured as in Table 14 may be transferred. According to an embodiment, it may be transferred as TLV-encoded data having elements in the form of Tag-Length-Value (TLV) as shown in each parameter of Table 15 below. A TLV structure may be used to encode data included in the DM payload IE.

**[Table 15]**

| **TAG** | **LENGTH** | **VALUE** |
|---|---|---|
| X1 | 8 | Type of Customer Identifier |
| | | 0x01: phone number |
| | | 0x02: user name |
| | | 0x03: user nickname |
| | | 0x04: user's membership ID |
| | | 0x05: RFU |
| X2 | 8 | Length of Customer Identifier |
| X3 | Variable | Customer Identifier |
| | | The identifier of customer according to the value of Type of Customer Identifier field |
| X4 | 8 | User Consent Indicator |
| | | 0x00: reject |
| | | 0x01:accept for connection |
| | | 0x02: user verification is done by a verification method e.g., Cardholder Verific ation Method (CVM). |
| | | 0x03:user consent for payment transaction is acquired (e.g., user's fingerprint is verified) |
| TBD | | |

According to an embodiment, the application data format of Table 15 may also be used for data transmission during time-scheduled TWR and data transmission phase of the hybrid UWB session.

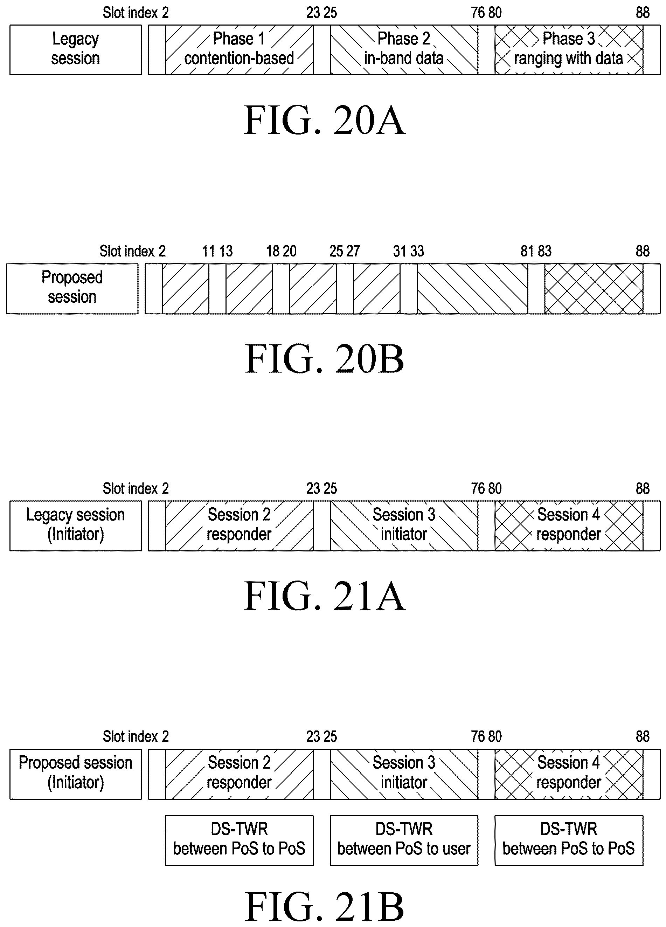

FIGS. 20A to 24 propose a UWB payment method for MPMU (Multi-POS and Multi-User). For MPMU within a hyper UWB session in an MPMU scenario, 1) flexible session design; 2) flexible device role setting in each session; 3) data piggyback in contention-based ranging messages may be required.

FIGS. 20A and 20B illustrate examples of session configuration according to an embodiment of the disclosure.

FIG. 20A illustrates legacy session configuration. Referring to FIG. 20A, a legacy session may include phase 1 for contention-based messages, phase 2 for in-band data transmission, and phase 3 for data exchange and ranging (DS-TWR). For example, slot indices 2-23 may be allocated to phase 1 for contention-based messages, slot indices 25-76 may be allocated to phase 2 for in-band data transmission, and slot indices 80-88 may be allocated to phase 3 for data exchange and ranging (DS-TWR).

FIG. 20B illustrates session configuration proposed in the disclosure. Referring to FIG. 20B, the session proposed in the disclosure has no restrictions on session configuration, and the number of phases and duration of each phase may be flexibly configured. For example, the session proposed in the disclosure may include multiple phases for contention-based messages, a phase for in-band data transmission, and a phase for data exchange and ranging (DS-TWR). For example, four phases for contention-based messages may be allocated to slot indices 2-11, 13-18, 20-25, 27-31, a phase for in-band data transmission may be allocated to slot indices 33-81, and a phase for data exchange and ranging (DS-TWR) may be allocated to slot indices 83-88. A flexible session may be configured for MPMU within a hyper UWB session in an MPMU scenario.

FIGS. 21A and 21B illustrate examples of device roles within a session according to an embodiment of the disclosure.

FIG. 21A is a view illustrating device roles in a legacy session. Referring to FIG. 21A, e.g., in session 2 corresponding to slot indices 2-23, session 3 corresponding to slot indices 25-76, and session 4 corresponding to slot indices 80-88, the electronic device may perform the role of initiator. The device role in each phase may be the same as the device role of the session.

FIG. 21B is a view illustrating device roles within a session proposed in the disclosure. Referring to FIG. 21B, e.g., in session 2 corresponding to slot indices 2-23, the electronic device may perform the role of responder, in session 3 corresponding to slot indices 25-76, the electronic device may perform the role of initiator, and in session 4 corresponding to slot indices 80-88, the electronic device may perform the role of responder. In session 2, DS-TWR between PoS may be performed, in session 3, DS-TWR between PoS and user device may be performed, and in session 4, DS-TWR between PoS may be performed. The role of each device may be set independently of the device role of the session. For MPMU within a hyper UWB session in an MPMU scenario, flexible device roles may be configured in each session.

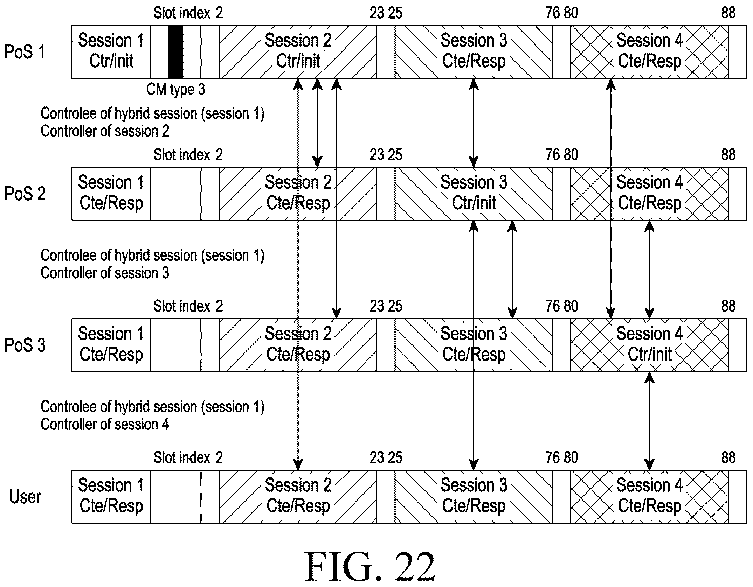

FIG. 22 illustrates an example in which device roles within each session are flexibly configured according to an embodiment of the disclosure.

Flexible device roles may be configured to support MPMU scenarios.

Referring to FIG. 22, in the first session, the first merchant device (PoS 1) may perform the role of controller/initiator, and the second merchant device (PoS 2), third merchant device (PoS 3), and customer device (User) may perform the role of controlee/responder. The first merchant device (PoS 1) may control block synchronization as the controller of the hybrid session.

In the second session, the first merchant device (PoS 1) may perform the role of controller/initiator, and the second merchant device (PoS 2), third merchant device (PoS 3), and customer device (User) may perform the role of controlee/responder.

In the third session, the second merchant device (PoS 2) may perform the role of controller/initiator, and the first merchant device (PoS 1), third merchant device (PoS 3), and customer device (User) may perform the role of controlee/responder.

In the fourth session, the third merchant device (PoS 3) may perform the role of controller/initiator, and the first merchant device (PoS 1), second merchant device (PoS 2), and customer device (User) may perform the role of controlee/responder.

One of the multiple merchant devices may become the controller of the phase to perform discovery for the remaining merchant devices and customer devices.

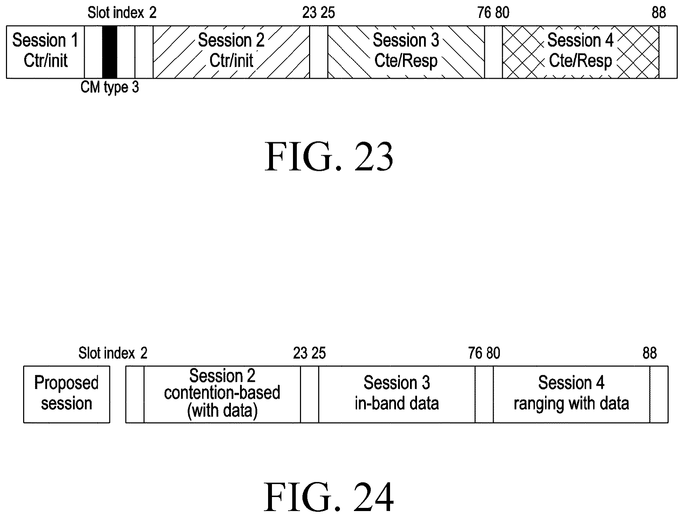

FIG. 23 is a view illustrating a control message that flexibly configures device roles within each session according to an embodiment of the disclosure.

Referring to FIG. 23, in a session, the merchant device (PoS) may perform the role of controller/initiator, and the remaining merchant devices and customer device may perform the role of controlee/responder. The merchant device (PoS) may transmit a control message (control message type 3) including phase configuration information. The phase configuration information may include at least one of the number of phases included within the hybrid session, the start slot index of each phase, or the end slot index of each phase.

According to an embodiment, MAC addressing mode and controller address fields may be included in the RRML of the control message (control message type 3) including phase configuration information to specify the MAC address of the controller device of each phase.

FIG. 24 is a view illustrating a case where data is piggybacked in a contention-based ranging message according to an embodiment of the disclosure.

The session shown in FIG. 24 may include session 2 for contention-based messages, session 3 for in-band data transmission, and session 4 for data exchange and ranging. According to an embodiment, data may be piggybacked and transmitted in contention-based ranging messages in session 2. For example, session 2 for contention-based messages may be allocated to slot indices 2-23, session 3 for in-band data transmission may be allocated to slot indices 25-76, and session 4 for data exchange and ranging (DS-TWR) may be allocated to slot indices 80-88.

In the initial discovery phase, the merchant device and customer device may have no information about each other, and piggyback data may be included in the ranging message to provide information about the merchant device (PoS device) for discovery. According to an embodiment, the information about the merchant device may include at least one of a session ID and MAC address for that merchant device.

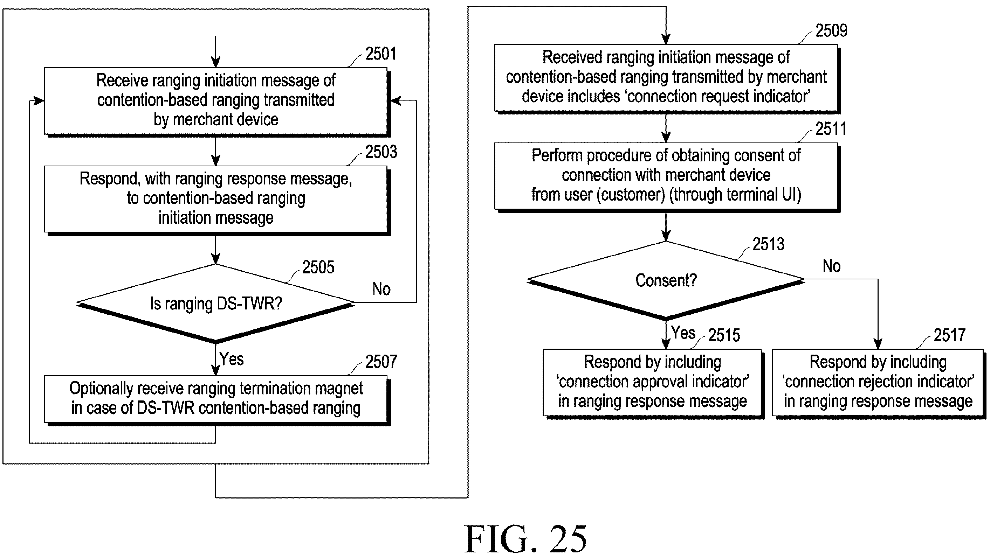

FIG. 25 is a flowchart illustrating operations of a customer device according to an embodiment of the disclosure.

Referring to FIG. 25, in operation 2501, the customer device may receive a ranging initiation message of contention-based ranging transmitted by a merchant device.

In operation 2503, the customer device may transmit a ranging response message corresponding to the contention-based ranging initiation message to the merchant device.

According to operation 2505, when the contention-based ranging between the customer device and merchant device is DS-TWR (2505-YES), in operation 2507, the customer device may optionally receive a ranging termination message.

The customer device may repeatedly perform operations 2501 to 2505.

In operation 2509, when the merchant device transmits a connection request indicator included in the ranging initiation message of contention-based ranging, the customer device may confirm that a connection request indicator is included in the ranging initiation message of contention-based ranging transmitted by the merchant device. The connection request indicator may be an indicator of Connection Request or Confirmation Request and may be transferred included in the payload of the Data Message IE in the UWB message performing contention-based ranging.

In operation 2511, the customer device may obtain information from the user (customer) through the device UI about whether to consent to connection to the merchant device. Operation 2511 is in the area of payment service implementation, where user consent approving connection with the merchant device that sent the connection request message may be obtained explicitly through the UI, or automatic approval according to ranging results based on distance and angle according to predetermined values (for example, within 1 m, within 30 degrees AoA azimuth value) is also possible.

In operation 2513, the customer device may confirm whether the user (customer) consents to connection to the merchant device.

If confirmed to consent to connection to the merchant device (2513-YES), in operation 2515, the customer device may transmit a ranging response message including a connection approval indicator.

If confirmed not to consent to connection to the merchant device (2513-NO), in operation 2517, the customer device may transmit a ranging response message including a connection rejection indicator.

According to an embodiment, until the customer terminal confirms explicit intent from the user regarding connection consent approval/rejection or implicitly obtains intent based on distance/angle, it may periodically perform ranging by responding to the merchant device with only a ranging response message without a separate indicator.

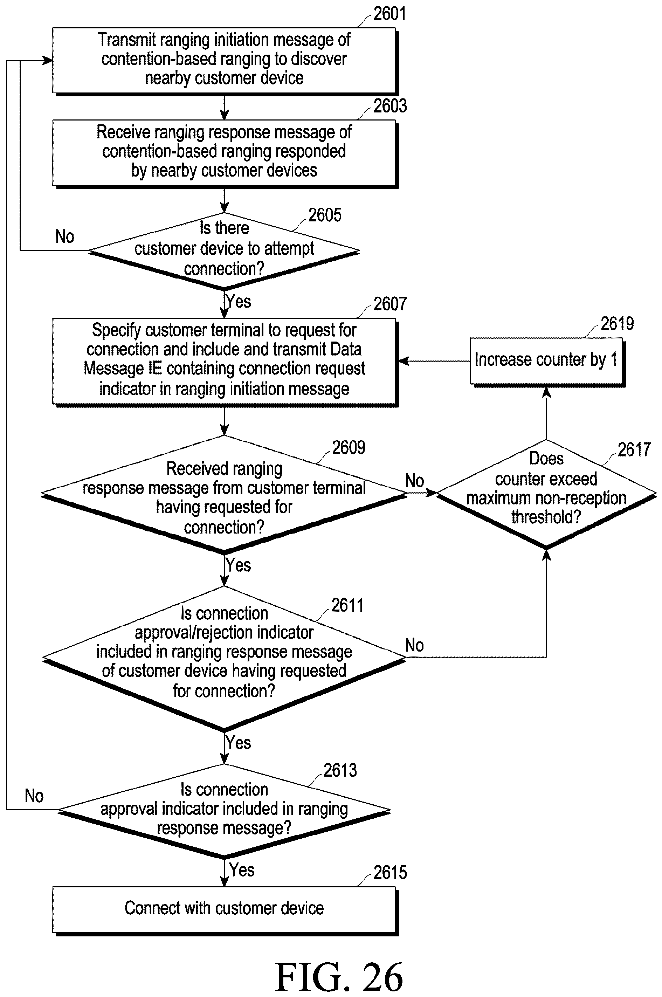

FIG. 26 is a flowchart illustrating operations of a merchant device according to an embodiment of the disclosure.

In operation 2601, the merchant device may transmit a ranging initiation message of contention-based ranging to discover nearby customer devices.

In operation 2603, the merchant device may receive ranging response messages of contention-based ranging responded by nearby customer devices.

In operation 2605, the merchant device may check whether there is a customer device (or customer terminal) to attempt connection to. In operation 2605, the merchant device may determine whether to connect based on the distance and angle values between the merchant device and customer device measured through the contention-based ranging response message received in 2603. Although not shown in the drawing, when the merchant device performs DS-TWR contention-based ranging, after operation 2603, the merchant device may transmit a ranging termination message. Nearby customer devices that received the ranging termination message transferred by the merchant device may transfer a ranging result report message or ranging measurement result report message to the merchant terminal on a contention basis according to the DS-TWR operation. The merchant terminal that received the ranging result report message or ranging measurement result report message may measure the distance between the merchant terminal and the responding clerk terminal based on DS-TWR and determine whether to connect with a specific clerk terminal based on this measured value.

In operation 2607, the merchant device may transmit a Data Message IE including a connection request indicator by specifying the customer device to request connection, included in the ranging initiation message.

In operation 2609, the merchant device may check whether a ranging response message has been received from the customer terminal requested for connection.

When a ranging response message is received from the customer terminal requested for connection (2609-YES), in operation 2611, the merchant device may check whether a connection approval/rejection indicator is included in the ranging response message of the customer device requested for connection.

When a connection approval/rejection indicator is included in the ranging response message of the customer device requested for connection (2611-YES), in operation 2613, the merchant device may check whether a connection approval indicator is included in the ranging response message.

When a connection approval indicator is included in the ranging response message (2613-YES), in operation 2615, the merchant device may perform a connection procedure with the customer device.

When a ranging response message is not received from the customer terminal requested for connection (2609-NO), in operation 2617, the merchant device may check whether the Counter has exceeded the maximum non-reception threshold. The maximum non-reception threshold means the maximum time the merchant device may wait until receiving one of the connection approval/rejection indicators after attempting connection.

According to an embodiment, the ranging message of contention-based ranging transmitted by the merchant device is transmitted periodically (for example, 200 ms), and when the maximum non-reception threshold is, e.g., 50, if no response including a connection approval or connection rejection indicator comes from the customer device requested for connection for 10 seconds (200 ms * 50 non-receptions), the merchant device may consider it a timeout and release the connection attempt. When the connection attempt is released, the merchant device may periodically transmit ranging initiation messages without special data/indicators to search for nearby customer devices.

In operation 2619, the merchant device may increase the counter value by 1 and perform operation 2607 again.

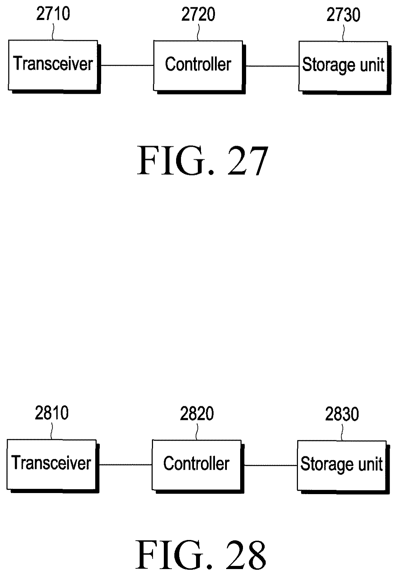

FIG. 27 illustrates a configuration of a first electronic device according to an embodiment of the disclosure.

In the embodiment of FIG. 27, the first electronic device may correspond to the UWB device of FIG. 1, or may be an electronic device including the UWB device, or including a part of the UWB device. The first UWB device may be a customer device (or user device) for the UWB-based payment service described above in FIGS. 1 to 26. In the disclosure, the customer device may also be referred to as a customer terminal.

Referring to FIG. 27, the first electronic device may include a transceiver 2710, a controller 2720, and a storage 2730. In the disclosure, the controller may be defined as a circuit, an application specific integrated circuit, or at least one processor.

The transceiver 2710 may transmit and receive signals to/from another entity.

The controller 2720 may control the overall operation of the customer device (or user device) according to the embodiment proposed in the disclosure. For example, the controller 2720 may control inter-block signal flow to perform the operations according to the above-described flowchart. Specifically, the controller 2720 may control the operations of the first electronic device described above with reference to FIGS. 1 to 26.

The storage unit 2730 may store at least one of information transmitted/received via the transceiver 2710 and information generated via the controller 2720. For example, the storage unit 2730 may store information and data necessary for the method described above with reference to FIGS. 1 to 26.

According to an embodiment, the controller 2720 may receive an advertisement message including at least one of the number of merchant devices, a list of merchant device-specific information, or length information of the list. According to an embodiment, the controller 2720 may receive a ranging initiation message including a first indicator requesting connection to the first electronic device from a second electronic device through UWB communication. According to an embodiment, the controller 2720 may control to transmit, in response to the ranging initiation message, a ranging response message including a second indicator indicating whether to approve connection to the second electronic device to the second electronic device through the UWB communication.

According to an embodiment, the list of merchant device-specific information may include a session ID for each of a plurality of merchant devices and MAC address information for each of the plurality of merchant devices.

According to an embodiment, the advertisement message may be configured based on a BLE advertisement format or a UWB advertisement format.

According to an embodiment, the controller 2720 may receive a ranging final message from the second electronic device through the UWB communication when the second indicator indicates approval of connection to the second electronic device. According to an embodiment, the controller 2720 may perform a payment transaction procedure with the second electronic device.

FIG. 28 illustrates a configuration of a second electronic device according to an embodiment of the disclosure.

In the embodiment of FIG. 28, the second electronic device may correspond to the UWB device of FIG. 1, or may be an electronic device including the UWB device, or including a part of the UWB device. The second electronic device may be, e.g., a merchant device for UWB-based payment service. In the disclosure, the merchant device may be referred to as any one of a merchant terminal, a clerk terminal, or a clerk device.

Referring to FIG. 28, the second electronic device may include a transceiver 2810, a controller 2820, and a storage 2830. In the disclosure, the controller may be defined as a circuit, an application specific integrated circuit, or at least one processor.

The transceiver 2810 may transmit and receive signals to/from another entity.

The controller 2820 may control the overall operation of the electronic device according to an embodiment. For example, the controller 2820 may control inter-block signal flow to perform the operations according to the above-described flowchart. Specifically, the controller 2820 may control the operations of the second electronic device described above with reference to FIGS. 1 to 26.

The storage unit 2830 may store at least one of information transmitted/received via the transceiver 2810 and information generated via the controller 2820. For example, the storage unit 2830 may store information and data necessary for the method described above with reference to FIGS. 1 to 26.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method for operating a first electronic device, the method comprising:
receiving an advertisement message including at least one of a number of merchant devices, a list of merchant device-specific information, or length information of the list;
receiving a ranging initiation message including a first indicator requesting connection to the first electronic device from a second electronic device through UWB communication; and
transmitting, in response to the ranging initiation message, a ranging response message including a second indicator indicating whether to approve connection to the second electronic device to the second electronic device through the UWB communication.

2. The method of claim 1, wherein the list of merchant device-specific information includes a session ID for each of a plurality of merchant devices and MAC address information for each of the plurality of merchant devices.

3. The method of claim 1, wherein the advertisement message is configured based on a BLE advertisement format or a UWB advertisement format.

4. The method of claim 1, further comprising:
receiving a ranging final message from the second electronic device through the UWB communication based on the second indicator indicating approval of connection to the second electronic device; and
performing a payment transaction procedure with the second electronic device.

5. A method for operating a second electronic device, the method comprising:
broadcasting an advertisement message including at least one of a number of merchant devices, a list of merchant device-specific information, or length information of the list;
transmitting a ranging initiation message including a first indicator requesting connection to a first electronic device to the first electronic device through UWB communication; and
receiving a ranging response message including a second indicator indicating whether to approve connection to the second electronic device from the first electronic device through the UWB communication.

6. The method of claim 5, wherein the list of merchant device-specific information includes a session ID for each of a plurality of merchant devices and MAC address information for each of the plurality of merchant devices.

7. The method of claim 5, wherein the advertisement message is configured based on a BLE advertisement format or a UWB advertisement format.

8. The method of claim 5, further comprising:
transmitting a ranging final message to the second electronic device through the UWB communication based on the second indicator indicating approval of connection to the second electronic device; and
performing a payment transaction procedure with the first electronic device.

9. A first electronic device, comprising:
a transceiver; and
a controller, wherein the controller is configured to:
receive an advertisement message including at least one of a number of merchant devices, a list of merchant device-specific information, or length information of the list;
receive a ranging initiation message including a first indicator requesting connection to the first electronic device from a second electronic device through UWB communication; and
control to transmit, in response to the ranging initiation message, a ranging response message including a second indicator indicating whether to approve connection to the second electronic device to the second electronic device through the UWB communication.

10. The first electronic device of claim 9, wherein the list of merchant device-specific information includes a session ID for each of a plurality of merchant devices and MAC address information for each of the plurality of merchant devices.

11. The first electronic device of claim 9, wherein the advertisement message is configured based on a BLE advertisement format or a UWB advertisement format.

12. The first electronic device of claim 9, wherein the controller is configured to:
receive a ranging final message from the second electronic device through the UWB communication based on the second indicator indicating approval of connection to the second electronic device; and
perform a payment transaction procedure with the second electronic device.

13. A second electronic device, comprising:
a transceiver; and
a controller, wherein the controller is configured to:
broadcast an advertisement message including at least one of a number of merchant devices, a list of merchant device-specific information, or length information of the list;
transmit a ranging initiation message including a first indicator requesting connection to a first electronic device to the first electronic device through UWB communication; and
receive a ranging response message including a second indicator indicating whether to approve connection to the second electronic device from the first electronic device through the UWB communication.

14. The second electronic device of claim 13, wherein the list of merchant device-specific information includes a session ID for each of a plurality of merchant devices and MAC address information for each of the plurality of merchant devices.

15. The second electronic device of claim 13, wherein the advertisement message is configured based on a BLE advertisement format or a UWB advertisement format.
